# EUROPÄISCHE PATENTSCHRIFT

(11) **EP 3 582 976 B1**
(45) Veröffentlichungstag und Bekanntmachung des Hinweises auf die Patenterteilung: **01.06.2022**
(21) Anmeldenummer: 18707301.0
(22) Anmeldetag: 15.02.2018
(51) Int. Cl.: B60B 11/10, B60B 15/26, B60B 19/00

(54) **NOTLAUFAUFSATZ FÜR EIN FAHRZEUGRAD**
EMERGENCY OPERATION ATTACHMENT FOR A VEHICLE WHEEL
GARNITURE DE SECOURS POUR UNE ROUE DE VÉHICULE

(30) Priorität: 15.02.2017 DE 102017103101
(43) Veröffentlichungstag der Anmeldung: 25.12.2019
(73) Patentinhaber: GV Engineering GmbH, 71296 Heimsheim (DE)
(72) Erfinder: TSIBERIDIS, Konstantin, 74199 Untergruppenbach (DE)
(74) Vertreter: Beyer, Andreas
(86) Internationale Anmeldenummer: PCT/EP2018/053764
(87) Internationale Veröffentlichungsnummer: WO 2018/149910

(56) Entgegenhaltungen:
- GB-A- 857 897
- US-A- 3 112 784
- US-A- 4 666 216
- US-A1- 2009 267 404
- US-B1- 6 217 125

## Beschreibung

Die vorliegende Erfindung betrifft einen Aufsatz für ein Fahrzeugrad zur Ermöglichung eines Fahrbetriebs bei plattem Reifen.

Das Dokument GB 857 897 A offenbart ein ringförmiges Hilfsrad, bestehend aus einem ein elastisches ringförmiges Reifenelement tragenden Hilfsrad-Scheibenelement. Das Hilfsrad-Scheibenelement ist relativ zum Haupt-Fahrzeugrad mittels zentrierender Stufenabschnitte, die den axial äußeren Konturen des an der Haupt-Radfelge vorgesehenen Seitenflansches entsprechen, positioniert und zentriert, wobei die zentrierenden Stufenabschnitte nur im Bereich mehrerer Befestigungsmittel vorgesehen sind, die gleichmäßig entlang des Umfangs des Hilfsrad-Scheibenelements verteilt sind.

Das Dokument US 6 217 125 B1 offenbart, dass zunächst eine Abstandshalter-Befestigungsmutter auf einen vorhandenen Fahrzeugrad-Befestigungsbolzen aufgeschraubt und dann ein Reserverad mit einem Reifen an der Abstandshalter-Befestigungsmutter angebracht wird. In einer Variante wird ein Gewindebolzen zum Fahrzeugrad-Befestigungsbolzen entgegengesetzt in die Abstandshalter-Befestigungsmutter eingeschraubt, das Reserverad mit einer Trägerplatte an den Gewindebolzen angebracht und mittels einer Standard-Befestigungsmutter befestigt. Das Dokument US 3 112 784 A beschreibt eine Antischlupfvorrichtung für ein Fahrzeugrad mit einem Luftreifen, wobei die Vorrichtung ein Trägermittel sowie Mittel zum Befestigen des Trägermittels an dem Fahrzeugrad aufweist.

Mit einem Fahrzeugrad ist hier ein Fahrzeugrad eines Kraftfahrzeugs gemeint.

Mit axialer Richtung ist vorliegend die Richtung der Drehachse des Fahrzeugrades gemeint. Mit der radialen Richtung ist die orthogonale Richtung zu dieser Drehachse des Fahrzeugrades gemeint. Der Reifen des Fahrzeugrades ist also von der Felge des Fahrzeugrades aus gesehen radial außenliegend angeordnet. Radial innenliegend ist beispielsweise der Lochkreis des Fahrzeugrades.

Die Erfindung schlägt einen Aufsatz für ein Fahrzeugrad mit den Merkmalen des Anspruchs 1 vor.

Der erfindungsgemäße Aufsatz für ein Fahrzeugrad zur Ermöglichung eines Fahrbetriebs bei plattem Reifen ist mit einem Grundkörper, der in einer axialen Richtung gesehen kreis- oder weitestgehend kreisringförmig ausgebildet und kennzeichnet sich dadurch, dass der Aufsatz eine Positioniereinrichtung zur Positionierung des Aufsatzes an einer Felge des Fahrzeugrads und eine von der Positioniereinrichtung unabhängig betätigbare Befestigungseinrichtung zur Befestigung des Aufsatzes an der Felge des Fahrzeugrads aufweist. Durch die erfindungsgemäße Ausgestaltung mit einer Positioniereinrichtung und einer Befestigungseinrichtung, die unabhängig voneinander betätigbar sind, lässt sich der erfindungsgemäße Aufsatz sehr einfach und sicher an dem Fahrzeugrad mit plattem Reifen anbringen.

Zum Anbringen des Aufsatzes an dem Fahrzeugrad wird der Aufsatz zunächst über die Positioniereinrichtung an dem Fahrzeugrad in der vorgesehenen Position positioniert. Die Positionierung über die Positioniereinrichtung ist dabei jedoch nicht ausreichend, um einen Fährbetrieb zu gewährleisten, sondern dient lediglich der korrekten Platzierung des Aufsatzes am Fahrzeugrad. Ist der Aufsatz über die Positioniereinrichtung in der gewünschten Position am Fahrzeugrad positioniert, so wird der Aufsatz anschließend über die Befestigungseinrichtung fest mit dem

Fahrzeugrad verbunden, vorzugsweise verspannt. Die Positioniereinrichtung bleibt vorteilhafterweise gegenüber der Felge des Fahrzeugrads unverspannt auch wenn der Aufsatz endgültig am Fahrzeugrad befestigt ist. Die Positioniereinrichtung ist derart ausgebildet, dass sie eine zentrierte Anordnung des Aufsatzes am Fahrzeugrad ermöglicht, wobei die Befestigungseinrichtung unabhängig von der Positioniereinrichtung betätigbar ist, wobei durch Betätigen der Befestigungseinrichtung der Aufsatz fest am Fahrzeugrad befestigbar, vorzugsweise verspannbar, ist.

Vorzugsweise sind die Befestigungsmittel der Befestigungseinrichtung als Fertigteil ausgebildet, das an den Aufsatz angeschraubt ist.

Vorzugsweise umfasst der Aufsatz einen Verriegelungsmechanismus, der ausgebildet und angeordnet ist, um das Befestigungsmittel, insbesondere ein schwenkbar gelagertes Hakenelement des Befestigungsmittels, zu verriegeln, wenn es sich im Hintergriff mit dem Felgenhorn befindet, vorzugsweise wobei der Verriegelungsmechanismus ein, vorzugsweise vorgespanntes, insbesondere federvorgespanntes, Rastelement umfasst. Bevorzugt ist, wenn das Rastelement rastend in das Hakenelement eingreift oder das Hakenelement rastend in das Rastelement eingreift, wenn der Verriegelungsmechanismus das Befestigungsmittel verriegelt. Hierdurch ist die Befestigung des Aufsatzes an der Felge besonders sicher. Insbesondere kann das Rastelement in Form eines, insbesondere über eine Feder, vorgespannten Bolzens ausgeführt sein, wobei das schwenkbar gelagerte Hakenelement beispielsweise eine Ausnehmung aufweisen kann, in die der federvorgespannte Bolzen eingreift und dieses verriegelt, wenn das Hakenelement in die Hintergriffstellung mit der Felge geschwenkt ist. Hierzu ist vorteilhafterweise diese Ausnehmung derart angeordnet, dass sie in der Hintergriffstellung über das Rastelement schwenkt, so dass das Rastelement in die Ausnehmung einfahren kann.

Vorzugsweise umfasst das jeweilige Befestigungsmittel eine Einschalung, insbesondere und ist als Fertigteil ausgebildet, wobei vorzugsweise in der Einschalung auch ein Verriegelungsmechanismus angeordnet ist. Der Verriegelungsmechanismus und das Befestigungsmittel können also, jedenfalls teilweise, in einer Einschalung angeordnet sein, die eine Art Gehäuse für diese Komponenten bildet. Bevorzugt ist, wenn diese Einschalung bzw. dieses Gehäuse mit den darin befindlichen Komponenten einzeln zusammenbaubar ist und dann die fertig vormontierte Einheit als Fertigteil an den Aufsatz montierbar bzw. montiert ist.

Die Positioniereinrichtung kann beispielsweise schwenkbare federgespannte krallenartige Kontaktelemente aufweisen, über die sich der Aufsatz beispielsweise an die Felge, insbesondere im Bereich des Felgenhorns, des Fahrzeugrads anclipsen lässt. Andere Ausgestaltungen der Kontaktelemente sowie der Positioniereinrichtung sind jedoch ebenso denkbar. Kontaktelemente der Positioniereinrichtung können auch in oder an Befestigungsmitteln der Befestigungseinrichtung angeordnet sein.

Eine Positioniereinrichtung, welche nicht Teil der beanspruchten Erfindung ist, kann bspw. als Greifeinrichtung ausgebildet sein, die ausgebildet ist, um über einen formschlüssigen Hintergriff und/oder um über einen kraftschlüssigen Eingriff der Greifeinrichtung mit einer, vorzugsweise kreisrunden, Öffnung in der Felge, die im Bereich des Lochkreises angeordnet ist, am Fahrzeugrad positioniert zu werden, wobei die Öffnung zu Löchern, die zur Aufnahme von Radschrauben bzw. Stehbolzen in der Felge vorgesehen sind, beabstandet in der Felge angeordnet ist, vorzugsweise wobei die Öffnung eine Mittenöffnung der Felge ist oder zu einer Drehachse der Felge beabstandet ist. Vorzugsweise ist jedenfalls ein Teil der Greifeinrichtung unlösbar mit dem Aufsatz, vorzugsweise einem Initialmontageabschnitt, auf den später noch im Detail eingegangen wird, verbunden. Hierdurch kann der Aufsatz bzw. der Initialmontageabschnitt besonders einfach am Fahrzeugrad befestigt werden. Insbesondere ist es vorteilhaft, wenn die Öffnung im Bereich des Lochkreises eine sogenannte Polykontrollbohrung ist. Der Aufsatz bzw. der Initialmontageabschnitt des entsprechend ausgebildeten Aufsatzes kann quasi in diese Öffnungen eingesteckt werden. Die Greifeinrichtung kann bspw. ein in seinem Durchmesser erweiterbares stiftartiges Element umfassen. Das stiftartige Element kann insbesondere derart ausgebildet sein, dass es im vollständig eingeschoben Zustand innerhalb der Polykontrollbohrung endet, sich also nicht vollständig durch diese hindurch erstreckt.

Vorzugsweise umfasst die Greifeinrichtung einen erweiterbaren Abschnitt, vorzugsweise der ausgebildet ist, um die Öffnung im Bereich des Lochkreises zu hintergreifen und/oder die Greifeinrichtung umfasst einen komprimierbaren Abschnitt, der ausgebildet ist, um im komprimierten Zustand durch die Öffnung im Bereich des Lochkreises geführt zu werden und sich in einen unkomprimierten Zustand zu erweitern, wenn er durch die Öffnung geführt ist. Ein erweiterbarer Abschnitt kann dabei beispielsweise eine Hülse sein, die durch Einführen eines Spreizelements aufgespreizt werden kann. Eine derartige Greifeinrichtung ist vorteilhafterweise im radial inneren Bereich des Aufsatzes angeordnet sein.

Die Greifeinrichtung in Form der spreizbaren Hülse kann dann beim Anbringen des Aufsatz, insbesondere des Initialmontageabschnitts, beispielsweise in die Polykontrollbohrung eingeführt werden und anschließend kann ein Spreizelement in die aufspreizbare Hülse eingeführt werden, um diese aufzuspreizen, so dass sie die Polykontrollbohrung hintergreift. Es ist auch denkbar, dass die Greifeinrichtung, wie oben genannt, einen komprimierbaren Abschnitt umfasst. Dieser wird beim Einführen in die Polykontrollbohrung komprimiert und erweitert sich dann selbstständig, wenn er durch die Polykontrollbohrung hindurchgeführt ist und hintergreift diese dann. Die eben beschriebenen Varianten ermöglichen ein einfaches Aufstecken des Aufsatz, insbesondere des Initialmontageabschnitts, zur Befestigung. Es wird die Montage des Aufsatzes vereinfacht.

Mit "im Bereich des Lochkreises angeordnet" ist dabei jedenfalls auch gemeint, dass sich die Öffnung von den Zwischenräumen zwischen den Speichen der Felge unterscheidet. Eine derartige Öffnung kann insbesondere eine sogenannte Polykontrollbohrung sein.

Die Greifeinrichtung kann beispielsweise, insbesondere wenn sie zum Eingriff in die Mittenöffnung der Felge ausgebildet ist, in Form einer geschlitzten Hülse ausgebildet sein. Im Innern der geschlitzten Hülse kann ein Element mit variierender radialer Erstreckung, insbesondere ein Konuselement, angeordnet sein, das gegenüber der geschlitzten Hülse in axialer Richtung bewegbar ist. Durch die axiale Bewegung des Elements kann die geschlitzte Hülse aufgespreizt werden, sodass sie in die Öffnung bzw. in die Mittenöffnung kraftschlüssig eingreift. Das Element kann beispielsweise über eine Schraube in axialer Richtung gegenüber der gespreizten Hülse bewegbar sein. Mit der geschlitzten Hülse kann hierbei auch eine Mehrzahl an spreizbaren Armen gemeint sein.

Optional ist die Greifeinrichtung als Teil des Aufsatzes, insbesondere des Initialmontageabschnitts, ausgebildet. Mit anderen Worten, sie kann unlösbar mit dem Initialmontageabschnitt verbunden sein.

Die Greifeinrichtung kann als ein, insbesondere stabartiger, Fortsatz ausgebildet sein, der einen Hakbereich umfassen kann, wobei der Fortsatz ausgebildet ist, um in die Öffnung eingeführt zu werden. Der Hakbereich kann beispielsweise ausfahrbar oder aufspreizbar ausgebildet sein, sodass er, wenn er durch die Öffnung durchgeführt ist, die Felge formschlüssig hintergreifen kann.

Der Hakbereich kann auch komprimierbar ausgebildet sein. Der Hakbereich kann dann beim Durchführen durch die Öffnung in seinem Durchmesser reduziert sein, und sich selbstständig aufweiten, wenn er durch die Öffnungen durchgeführt ist, sodass er die Felgen quasi automatisch hintergreifen kann. Hierzu kann der Hakbereich beispielsweise reversibel kompressibel, federnd und/oder federnd gelagert ausgebildet sein.

In einer Ausführungsform umfasst die Greifeinrichtung einen erweiterbaren Abschnitt auf, der ausgebildet ist, um die Öffnung im Bereich des Lochkreises zu hintergreifen. Ein derartiger erweiterbarer Abschnitt kann beispielsweise durch einen Hakbereich, der aufspreizbar ausgebildet ist, gebildet sein. Beispielsweise kann die Greifeinrichtung zwei Hakarme umfassen, die sich bspw. durch Einschrauben eines Spreizelements, bspw. einer Schraube, voneinander weg bewegen und damit aufspreizen lassen.

Die Greifeinrichtung kann insbesondere auch hohlstiftartig ausgebildet sein, wobei sie im Inneren ein Spreizelement, insbesondere einen aufweitenden Stift, umfassen kann, der durch Bewegung in axialer Richtung den erweiterbaren Abschnitt aufweitet. An dem Aufsatz, insbesondere dem Initialmontageabschnitt, sind vorzugsweise mehrere Greifeinrichtungen angeordnet. Sind die Greifeinrichtungen bspw. wie eben beschrieben hohlstiftartig ausgebildet, so können die gegebenenfalls vorhandenen aufweitenden Stifte bzw. Spreizelemente miteinander verbunden sein. Vorzugsweise können sie zusätzlich beispielsweise durch eine, bspw. als Schraube ausgebildete, Betätigungseinheit, in axialer Richtung gemeinsam bewegbar sein, um die erweiterbaren Abschnitte aufzuweiten.

Der Aufsatz ist vorzugsweise derart ausgebildet, dass der Aufsatz einen Laufflächenabschnitt, der eine Lauffläche bzw. den Laufflächenkörper des Aufsatzes umfasst, aufweist, und wobei der Aufsatz einen Initialmontageabschnitt umfasst, wobei wenigstens ein Teil des Laufflächenabschnitts separat von dem Initialmontageabschnitt und mit diesem lösbar verbindbar ausgebildet ist oder gegenüber diesem beweglich ausgebildet ist, und wobei der Initialmontageabschnitt radial innenliegend von der Lauffläche angeordnet ist, wenn der Aufsatz am Fahrzeugrad befestigt ist.

Vorzugsweise ist der Aufsatz derart ausgebildet, dass der Initialmontageabschnitt und der Laufflächenabschnitt, also der die Lauffläche des Aufsatzes umfassende Teil des Aufsatzes, separat und vollständig voneinander lösbar ausgebildet sind. Vorzugsweise umfasst der Laufflächenabschnitt wiederum wenigstens zwei voneinander lösbare umfängliche Segmente, die derart zusammensetzbar sind, dass sie die kreisförmige Lauffläche bilden.

Vorteilhafterweise ist die Befestigungseinrichtung ausgebildet, um das Felgenhorn der Felge zu hintergreifen. Hierzu weist die Befestigungseinrichtung vorteilhafterweise mindestens ein, vorzugweise mehrere, Befestigungsmittel auf, die ausgebildet sind, um das Felgenhorn der Felge zu hintergreifen.

Die Befestigungsmittel können jedoch auch in Form von Schrauben ausgebildet sein, welche durch entsprechende Öffnungen in dem Grundkörper in entsprechende Schraubenaufnahmen an der Felge eingreifen können. In diesem Fall stellt das Einschrauben dieser Schrauben die Betätigung der Befestigungseinrichtung dar.

Ist der Aufsatz nach Verwendung der Positioniereinrichtung dann an dem Fahrzeugrad in dem durch die Positioniereinrichtung erreichbaren "losen Zustand" platziert, so erfolgt die endgültige Befestigung am Fahrzeugrad über die Befestigungseinrichtung. Hierzu kann die Befestigungseinrichtung beispielsweise krallen- oder spannbackenartige Befestigungsmittel umfassen, die dazu ausgebildet sind, die Felge, insbesondere im Bereich des Felgenhorns zu hintergreifen. Diese Befestigungsmittel können dann betätigt werden, um den Aufsatz fest am Fahrzeugrad zu befestigen, vorzugsweise zu verspannen.

Die Befestigung des Aufsatzes am Fahrzeugrad erfolgt Bevorzugterweise derart, dass sich der Aufsatz beim Betätigen der Befestigungseinrichtung in axialer Richtung auf die Felge zubewegt. Der Aufsatz wird damit beim Betätigen der Befestigungseinrichtung in gewisser Weise zur Felge hin gedrängt. Vorteilhafterweise erfolgt beim Befestigen über die Befestigungseinrichtung also nicht lediglich eine Verspannung in radialer Richtung sondern auch eine Verschiebung des Aufsatzes in axialer Richtung zur Felge hin. Der Aufsatz presst sich in gewisser Weise in axialer Richtung gesehen gegen die Felge. Auf diesen optionalen und vorteilhaften Aspekt der Befestigung des Aufsatzes wird weiter unten noch im Detail eingegangen.

Vorteilhafterweise weißt die Oberfläche des Aufsatzes in dem Bereich, der für eine Kontaktierung der Felge vorgesehen ist eine nachgiebige Oberfläche, beispielsweise durch eine Gummierung, auf.

Der Grundkörper ist bevorzugt unter Verwendung von Stahl hergestellt. Andere Materialien sind jedoch ebenso denkbar. Die Aussage bezüglich der Form des Grundkörpers (der Grundkörper ist in axialer Richtung gesehen kreis- oder weitestgehend kreisringförmig ausgebildet) bezieht sich auf dessen Zustand, wenn der Aufsatz am Fahrzeugrad, in seiner für den Fahrbetrieb vorgesehenen Konfiguration angebracht ist. Beispielsweise kann der Grundkörper mehrere Einzelteile, die jeweils nicht mehr Kreis oder kreisringförmig sind, umfassen, der Grundkörper kann in diese Einzelteile zerlegbar sein und/oder diese Einzelteile können schwenkbar miteinander verbunden sein. Dies wird später noch im Detail erläutert.

Der erfindungsgemäße Aufsatz stellt eine kompakte Alternative für ein Ersatzrad dar.

Die Positioniereinrichtung umfasst bevorzugt wenigstens zwei, vorzugsweise gleichmäßig in Umfangsrichtung verteilt am Grundkörper angeordnete, Kontaktelemente, die jeweils in mindestens einer, vorzugsweise mehreren, vorgegebenen Feststellposition bzw. Feststellpositionen, die einem genormten Felgenhorndurchmesser entspricht bzw. entsprechen, feststellbar sind, um den Aufsatz an einer entsprechenden Felge mit genormtem Felgenhorndurchmesser zentriert zu positionieren.

Beispielsweise kann die Positioniereinrichtung wenigstens zwei Kontaktelemente umfassen, die zwischen jeweiligen Feststellpositionen für genormte Felgenhorndurchmesser für 18, 19 und 20 Zoll-Felgen verschiebbar sind. In den jeweils den entsprechenden Felgenhorndurchmesser zugeordneten Feststellpositionen sind die Kontaktelemente der Positioniereinrichtung einrastbar, so dass der Aufsatz dann auf einer Felge mit dem entsprechenden Durchmesser in einfacher Weise anbringbar bzw. aufclipsbar ist.

Beispielsweise können die Kontaktelemente, um in die einzelnen Feststellpositionen überführbar zu sein, in radialer Richtung verschiebbar sein und können in umfänglicher Richtung in Einrastschlitze schiebbar sein, die den Feststellpositionen entsprechen. Wenn die Kontaktelemente in die Einrastschlitze eingeschoben sind, so sind sie in radialer Richtung gegen ein Verschieben fixiert. Um jedoch ein leichtes Anbringen bzw. Aufclipsen des Aufsatzes an das Fahrzeugrad zu ermöglichen, können die Kontaktelemente in ihrem in die jeweiligen Einrastschlitze eingeschoben Zustand in radialer Richtung schwenkbar sein.

Dabei ist es vorteilhaft, wenn die Kontaktelemente nach radial einwärts federvorgespannt sind, so dass sie quasi die Felge des Fahrzeugrads selbstständig ergreifen und den Aufsatz durch die Federvorspannung gegenüber der Felge zentrieren können.

Bevorzugt ist, wenn die Befestigungseinrichtung wenigstens eine Druckmesseinrichtung umfasst, die ausbildet ist, um eine Verspannung der Befestigungseinrichtung gegen die Felge, vorzugsweise das Felgenhorn, zu erfassen. Beispielsweise kann die Befestigungseinrichtung einen Drucksensor umfassen, über den ein Druck messbar ist, mit dem die Befestigungseinrichtung den Aufsatz gegen die Felge spannt.

Die Befestigungseinrichtung kann Befestigungsmittel mit einem Drucksensor umfassen. Ein derartiger Drucksensor ist dabei dazu ausgebildet um einen Druck, mit dem das jeweilige Befestigungsmittel an der Felge bzw. am Felgenhorn anliegt zu erfassen. Durch die Signale der Drucksensoren bzw. des Drucksensors ist dann die Kraft ermittelbar, mit welcher die Befestigungseinrichtung gegen die Felge verspannt ist.

In einer bevorzugten Ausführungsform umfasst der Aufsatz neben der Druckmesseinrichtung auch eine Signaleinrichtung, die ausgebildet und eingerichtet ist, um ein Signal abzugeben, wenn die Verspannung des Aufsatzes gegenüber der Felge ausreichend ist. Die Signaleinrichtung ist ausgebildet, um ein Signal abzugeben, wenn der Aufsatz mit ausreichender Verspannung bzw. ausreichend sicher an der Felge befestigt ist.

Die Signaleinrichtung kann zusätzlich oder alternativ auch eingerichtet und ausgebildet sein, um ein Signal abzugeben wenn der Aufsatz über die Positioniereinrichtung korrekt oder inkorrekt positioniert ist.

Bevorzugt ist auch, wenn die Befestigungseinrichtung wenigstens ein, ggf. mehrere, lösbare Befestigungsmittel umfasst und/oder wenigstens ein, ggf. mehrere, in radialer Richtung beweglich, insbesondere verschieblich, angebrachte oder anbringbare Befestigungsmittel umfasst. Die Befestigungsmittel können, bspw. mittels Halteböcken, in verschiedenen Positionen, welche den verschiedenen Feststellpositionen der Kontaktelemente der Positioniereinrichtung zugeordnet sind, also auf verschiedene Felgendurchmesser abgestimmt sind, an dem Aufsatz lösbar anbringbar sein. Denkbar ist auch eine leichtgängige verschiebliche Lagerung der Befestigungsmittel, wobei die Befestigungsmittel vorzugsweise in bestimmten Positionen einrastbar sind und in diesen gesondert gegenüber der Felge verspannbar sind. Beispielsweise können die Befestigungsmittel händisch entlang einer Führung verschiebbar sein und dadurch grob auf einen Felgendurchmesser einstellbar sein. Vorzugsweise sind die Befestigungsmittel dabei in vorgesehenen Positionen einrastbar. In diesem eingerasteten Zustand können die Befestigungsmittel dann über kurze Distanzen mittels eines entsprechenden Werkzeugs, beispielsweise eines Innensechskants, oder auch werkzeuglos gegen die Felge, bspw über Verschwenken oder kurzstreckiges Verschieben in radialer Richtung, verspannbar sein. Bevorzugt ist auch, wenn die Befestigungseinrichtung einen Kopplungsmechanismus umfasst, der eine Bewegung wenigstens zweier beweglicher, vorzugsweise mehrerer, insbesondere aller beweglichen, Befestigungsmittel beim Verspannen der Befestigungseinrichtung in radialer Richtung und/oder in axialer Richtung koppelt, vorzugsweise wobei der Kopplungsmechanismus derart ausgebildet ist, dass die Bewegung der gekoppelten beweglichen Befestigungsmittel gleichförmig und/oder gleichgerichtet ist. Hierzu können beispielsweise mehrere Befestigungsmittel über einen Spannring nach innen verspannbar sein. Der Spannring kann beispielsweise einen reduzierbaren Durchmesser aufweisen, wobei der Spannring derart angeordnet und ausgebildet ist, dass bei einer Reduzierung des Durchmessers des Spannrings, die gekoppelten Befestigungsmittel nach radial innen schwenkbar und gegen die Felge spannbar sind.

Der Spannring kann alternativ in Umfangsrichtung rotierbar ausgebildet sein. Durch eine Rotation des Spannrings kann dieser in axialer Richtung, bspw. entlang eines Gewindes, bewegbar sein. Bei einer zur Felge hin gerichteten Bewegung eines derartigen Spannrings können beispielsweise die Befestigungsmittel derart ausgebildet und angeordnet sein, dass der Spannring bei seiner axial zur Felge hin gerichteten Bewegung auf abgeschrägte Flächen der Befestigungsmittel treffen kann, wodurch die Befestigungsmittel nach radial innen schwenkbar und/oder verschiebbar sein können. Durch eine Rotation eines derartigen Spannrings in Umfangsrichtung kann damit die Befestigungseinrichtung betätigt werden. Die Befestigungsmittel der Befestigungseinrichtung werden bei dieser Betätigung zeitgleich und gleichförmig, bspw. über ein Verschwenken nach radial innen, gegenüber der Felge verspannt.

Bevorzugt ist auch, wenn der Kopplungsmechanismus ein Spannelement umfasst, dass wenigstens zwei Befestigungsmittel miteinander verbindet oder über das wenigstens zwei Befestigungsmittel miteinander verbindbar sind, wobei das Spannelement in seiner Erstreckung in radialer Richtung verkürzbar ausgebildet ist. Beispielsweise kann ein derartiges Spannelement stabartig oder auch kreuzartig ausgebildet sein. Mit seinen beiden Enden kann das Spannelement mit zwei sich gegenüberliegenden Befestigungsmitteln der Befestigungseinrichtung verbindbar sein, beispielsweise einhakbar sein.

Das Spannelement kann beispielsweise ein Mittelstück mit gegenläufigen Gewinden aufweisen. In die gegenläufigen Gewinde können die an den Befestigungsmitteln befestigbaren Enden eingeschraubt sein. Durch eine Relativrotation des Mittelstücks gegenüber den Enden werden die Enden entweder in das Mittelstück hinein oder aus diesem herausgeschraubt, wodurch sich das Spannelement in radialer Richtung entweder verlängert oder verkürzt. Die Befestigungsmittel können durch das Verkürzen des Spannelements aufeinander zubewegbar sein, wodurch ein Betätigen der Befestigungseinrichtung bzw. ein Spannen der Befestigungsmittel gegenüber der Felge realisierbar ist. Die Befestigungsmittel können auch durch ein Verlängern des Spannelements nach radial innen schwenkbar sein, wodurch ein Betätigen der Befestigungseinrichtung bzw. ein Spannen der Befestigungsmittel gegenüber der Felge realisierbar ist.

Vorteilhaft ist auch, wenn die Befestigungsmittel gegenüber dem Grundkörper, bspw. gegenüber Halteböcken oder anderen Einrichtungen zur Befestigung der Befestigungsmittel gefedert angebracht oder anbringbar sind. Ebenso oder alternativ können die Halteböcke oder anderen Einrichtungen zur Befestigung der Befestigungsmittel gefedert gegenüber dem Grundkörper angebracht sein.

Zur Realisierung des Kopplungsmechanismus ist auch denkbar, dass die einzelnen Befestigungsmittel beispielsweise über eine Art starres Spanngurtsystem miteinander verbunden sind, dabei ist der Spanngurt in seiner umfänglichen Erstreckung verkürzbar.

Denkbar ist auch ein Kopplungsmechanismus über beispielsweise pneumatische oder hydraulische Betätigung der Befestigungseinrichtung. Beispielsweise können die Befestigungsmittel über gemeinsame Leitungen mit Druck beaufschlagbar und dadurch betätigbar sein.

In einer vorteilhaften Variante sind sowohl die Befestigungseinrichtung als auch die Positioniereinrichtung, bspw. über eine jeweilige Betätigungseinrichtung, pneumatisch oder hydraulisch betätigbar. Vorzugsweise ist hierzu die Befestigungseinrichtung als auch die Positioniereinrichtung über entsprechende Anschlüsse mit einer Druckmittelquelle verbindbar oder weist eine Druckmittelquelle auf. Eine Druckmittelquelle kann dabei beispielsweise ein Reifen oder ein Kompressor oder ein anderer im oder am Fahrzeug befindlicher Druckspeicher oder Druckerzeuger sein.

Die Befestigungsmittel können beispielsweise auch über eine Art Zahnradsystem miteinander verbunden sein, um den oben genannten Kopplungsmechanismus zu realisieren.

Allgemein, also bei allen Ausführungen des Kopplungsmechanismus, ist bevorzugt, wenn nicht nur die radiale Bewegung der einzelnen Befestigungsmittel über den Kopplungsmechanismus gekoppelt ist, sondern entweder alternativ oder zusätzlich auch eine axiale Bewegung der Befestigungsmittel bspw. nach einer der oben beschriebenen Arten über den Kopplungsmechanismus gekoppelt ist.

Vorteilhaft ist auch, wenn die Befestigungseinrichtung, vorzugsweise wenigstens eines der Befestigungsmittel, vorzugsweise mehrere, insbesondere sämtliche Befestigungsmittel, einen Hakabschnitt umfassen, der ausgebildet ist, um einen Abschnitt, insbesondere das Felgenhorn, der Felge des Fahrzeugrads zu hintergreifen. Über einen derartigen Hakabschnitt lässt sich der Aufsatz in vorteilhafter Weise sicher an der Felge des Fahrzeugrads anbringen. Mit einem Hakabschnitt ist dabei ein Abschnitt gemeint, der derart ausgebildet ist, dass er den Abschnitt der Felge, vorzugsweise das Felgenhorn der Felge, formschlüssig hintergreifen kann. Eine bevorzugte Ausführungsform kennzeichnet sich dabei dadurch, dass die Befestigungseinrichtung, vorzugsweise an mehreren um den Umfang verteilten Befestigungsmitteln, mehrere um den Umfang verteilte derartige Hakabschnitte aufweist, über die jeweils das Felgenhorn der Felge formschlüssig hintergreifbar ist.

Vorteilhaft ist auch, wenn die Befestigungseinrichtung einen Kontaktabschnitt, der vorzugsweise am Hakabschnitt angeordnet ist, umfasst, wobei der Kontaktabschnitt eine nachgiebige, elastische Oberfläche, bspw. durch ein Beschichtung, zur Verhinderung einer Beschädigung des Abschnitts der Felge, insbesondere des Felgenhorns, umfasst. Mit dem Kontaktabschnitt ist dabei derjenige Abschnitt der Befestigungseinrichtung gemeint, der bei vorgesehener Montage des Aufsatzes am Fahrzeugrad, bzw. an der Felge des Fahrzeugrades, die Felge, insbesondere das Felgenhorn kontaktiert. Durch die beschriebene nachgiebige elastische Beschichtung bzw. Oberfläche, welche beispielsweise durch eine Gummierung implementiert werden kann, wird eine Beschädigung der Felge bzw. Felgenhorns zuverlässig vermieden.

Vorteilhaft ist auch, wenn der Kontaktabschnitt, insbesondere der Hakabschnitt, in Umfangsrichtung gekrümmt ausgebildet ist, um sich an das Felgenhorn anzuschmiegen. Hierzu können beispielsweise die Hakabschnitte bzw. die Kontaktabschnitt der Befestigungseinrichtung länglich und der umfänglichen Krümmung des Felgenhorns entsprechend in Umfangsrichtung gekrümmt ausgebildet sein. Dabei muss die Krümmung der Kontaktabschnitte nur im Wesentlichen der Krümmung der Felge entsprechen, insbesondere, wenn die nachgiebige elastische Beschichtung vorhanden ist.

Vorteilhaft ist auch, wenn die Befestigungseinrichtung derart ausgebildet ist, dass sie die Felge, insbesondere das Felgenhorn, auf wenigstens einem Sechstel, vorzugsweise einem Viertel, vorzugsweise einem Drittel, vorzugsweise der Hälfte, deren, bzw. dessen, umfänglicher Erstreckung kontaktiert, wenn der Aufsatz an dem Fahrzeugrad angebracht ist. Dies ist beispielsweise durch die oben genannten in Umfangsrichtung gekrümmt ausgebildeten Hakabschnitte bzw. Kontaktabschnitte möglich. Beispielsweise können also bei dieser Ausführungsform die Kontaktabschnitte und/oder die Hakabschnitte auf einem Sechstel der umfänglichen Erstreckung des Felgenhorns an diesem anliegen.

Vorteilhaft ist auch, wenn die Befestigungseinrichtung, vorzugsweise der Kontaktabschnitt, vorzugsweise das Befestigungsmittel, insbesondere dessen Hakabschnitt, derart ausgebildet ist, dass der Aufsatz beim Befestigen an der Felge des Fahrzeugrads in axialer Richtung zur Felge hin gedrängt wird. Der Aufsatz zieht sich also beim Befestigen am Fahrzeugrad selbst in Richtung der Felge. Dies kann beispielsweise über die axiale Beweglichkeit der Befestigungsmittel realisiert sein. Bspw. kann eine radiale Einwärtsbewegung der Befestigungsmittel mit einer axialen Bewegung zwangsgekoppelt sein.

Vorteilhaft ist auch, wenn die Befestigungseinrichtung, insbesondere der Kontaktabschnitt bzw. der Hakabschnitt, eine in axialer Richtung gesehen nach radial innen, vorzugsweise linear oder bogenförmig, abfallende Spannfläche umfasst, wobei die Befestigungseinrichtung derart ausgebildet ist, dass sich die Spannfläche beim Befestigen des Aufsatzes an der Felge des Fahrzeugrads nach radial innen bewegt, insbesondere verschiebt, und die Spannfläche derart ausgebildet ist, dass der Aufsatz beim Befestigen an der Felge des Fahrzeugrads in axialer Richtung zur Felge hin gedrängt wird. Durch die Spannfläche, die wie oben beschrieben ausgebildet ist, wird bei einer Bewegung der Spannfläche, beispielsweise durch Bewegung der Befestigungsmittel, nach radial innen gleichzeitig eine Bewegung verursacht, die den Aufsatz in Richtung der Felge des Fahrzeugrads zwängt. Bei einer derartigen Ausgestaltung drängt sich also der Aufsatz beim Befestigen auf das Fahrzeugrad hin und sorgt für einen sicheren und festen Halt.

Vorteilhaft ist auch, wenn der Grundkörper ein felgenseitiges Teilstück und ein von diesem lösbares felgenabgewandtes Teilstück umfasst. Der Grundkörper kann dabei beispielsweise entlang einer zur axialen Richtung orthogonal verlaufenden Ebene in die eben genannten beiden Teilstücke trennbar sein. Zum einen lässt sich hierdurch der Aufsatz flexibler handhaben und zum anderen ergeben sich hieraus Vorteile für die Montage des Aufsatzes.

Vorteilhaft ist auch, wenn der Grundkörper, bzw. ggf. jeweils das felgenseitige Teilstück und das felgenabgewandte Teilstück, wenigstens zwei umfängliche Segmente umfasst bzw. umfassen. Bei dieser Ausführungsform sind also der Grundkörper bzw. die jeweiligen Teilstücke in umfänglicher Richtung in einzelne Segmente unterteilt. Hierdurch wird die Montage und Handhabung des Aufsatzes verbessert.

Vorteilhaft ist auch, wenn die umfänglichen Segmente, vorzugsweise lösbar, miteinander, insbesondere über einen, vorzugsweise lösbaren, Klappmechanismus oder eine Hintergriffstruktur in umfänglicher Richtung, miteinander verbunden sind. Beispielsweise über einen Klappmechanismus kann der Aufsatz, wenn er nicht benötigt wird, gefaltet und verstaut werden. Sind die einzelnen Segmente lösbar voneinander ausgebildet, so kann der Aufsatz in Einzelteile zerlegt und platzsparend verstaut werden. Die Ausführungsvariante mit den Segmenten bietet außerdem die Möglichkeit, einzelne Segmente zunächst miteinander zu verbinden und diese verbundenen Segmente dann am Fahrzeugrad zu montieren. Nach der Montage dieser verbundenen Segmente kann das Fahrzeugrad gedreht werden und ein weiteres Segment oder mehrere weitere Segmente eingefügt bzw. eingeschwenkt werden, um den Aufsatz am Fahrzeugrad zu vervollständigen. Hierdurch kann beispielsweise eine Montage des Aufsatzes ermöglicht werden, ohne das Fahrzeugrad vom Fahrzeug abzunehmen.

Die umfänglichen Segmente weisen in einer bevorzugten Ausführungsform jeweils ein ausschiebbares Element auf, das in ein benachbartes umfängliches Segmente in eine entsprechende Aufnahme einschiebbar ist, wodurch die beiden umfänglichen Segmente starr miteinander verbindbar sind.

Vorteilhaft ist auch, wenn das felgenseitige Teilstück und das felgenabgewandte Teilstück, bzw. je ein Segment des felgenseitigen Teilstücks und des felgenabgewandten Teilstücks, im zusammengesetzten Zustand einen Aufnahmeabschnitt bilden, in dem ein Laufflächenkörper, bzw. ein Segment eines Laufflächenkörpers, beim Zusammensetzen in den zusammengesetzten Zustand formschlüssig, insbesondere über einen formschlüssigen Hintergriff, gehalten einsetzbar ist. Mit einem Laufflächenkörper ist dabei ein Element gemeint, dass dazu ausgebildet ist, eine Lauffläche des Aufsatzes, also die Kontaktfläche mit der Straße zu bilden.

Vorzugsweise ist dieser Laufflächenkörper aus einem elastischen Gummimaterial bzw. Polymermaterial gebildet. Die formschlüssige Halterung, bzw. der formschlüssige Hintergriff, des Laufflächenkörpers kann durch eine schwalbenschwanzförmige Rinne, die zwischen den beiden Teilstücken gebildet ist, ausgeführt sein, wobei der Laufflächenkörper einen entsprechenden komplementär zu dieser Rinne ausgebildeten Abschnitt aufweist der in dieser Rinne formschlüssig aufnehmbar ist. Eine derartige Rinne ist eine Ausführungsform eines Aufnahmeabschnitts.

Vorteilhaft ist auch, wenn der Laufflächenkörper stoßdämpfend ausgebildet ist, vorzugsweise wobei der Laufflächenkörper aus einem elastisch federnden Material gebildet ist und/oder eine elastisch federnde Struktur aufweist, insbesondere eine Hohlräume und/oder Löcher umfassende Struktur aufweist. Hierdurch kann der Laufflächenkörper Fahrbahnunebenheiten abfedern. Denkbar ist jedoch auch ein luftgefüllter Laufflächenkörper ähnlich eines Reifens. Denkbar ist ein Laufflächenkörper aus einem Polymermaterial mit im Wesentlichen in axialer Richtung verlaufenden Durchbrüchen, welche zu einer elastisch dämpfenden Eigenschaft des Laufflächenkörpers führen. Denkbar sind jedoch auch andere Strukturen des Laufflächenkörpers, die zu den federnden Eigenschaften führen, insbesondere sind hierzu Hohlräume, die geschlossen oder offen sein können, im Laufflächenkörper denkbar.

Der Laufflächenkörper kann Hohlräume umfassen, die jeweils einzeln beispielsweise über separate Ventile oder über separate im Aufsatz vorhandene Zugangsleitungen mit Druckluft bzw. einem Druckmittel beaufschlagbar sind. Durch eine Beaufschlagung der Hohlräume mit einem Druckmittel kann die Federung des Laufflächenkörpers individuell je nach Bedarf bzw. je nach gewünschter Federung eingestellt werden.

Es kann vorteilhaft sein, wenn der Grundkörper Durchbrüche aufweist. Diese Durchbrüche können zum einen dazu dienen das Gewicht des Grundkörpers und damit des Aufsatzes zu reduzieren. Zum anderen können diese Durchbrüche dazu dienen, dass der Aufsatz in einfacher Weise zusammenklappbar oder zusammenlegbar ist. In zusammengeklapptem oder zusammengelegtem Zustand kann vorzugsweise wenigstens ein von der Oberfläche des Grundkörpers abstehendes Element, wie beispielsweise die Befestigungseinrichtung oder ein Teil der Befestigungseinrichtung, in einen derartigen Durchbruch hineinragen.

Der Laufflächenkörper kann vorteilhafterweise derart ausgebildet sein, dass er eine Erstreckung in axialer Richtung aufweist, die mindestens der Erstreckung des Grundkörpers in axialer Richtung entspricht, insbesondere diese jedoch übersteigt. Mit anderen Worten der Laufflächenkörper kann in axialer Richtung gesehen dicker als oder wenigstens gleich dick wie der Grundkörper ausgeführt sein.

Vorteilhaft ist auch, wenn sich eine radial außen liegende Laufoberfläche des Aufsatzes in Richtung des Fahrzeugrades in axialer Richtung gesehen bis in ein Felgenmaul der Felge erstrecken, wenn der Aufsatz an der Felge des Fahrzeugrads befestigt ist. Vorteilhaft ist überdies, wenn sich der Aufsatz, bzw. dessen radial außen liegende Laufoberfläche, in Richtung des Fahrzeugrades in axialer Richtung gesehen bis zur Mitte der Felge erstreckt. Die Laufoberfläche des Aufsatzes überdeckt bei diesen Ausführungsformen also teilweise den Reifen. Beispielsweise kann der Aufsatz hierdurch als Schneekettenersatz dienen. Eine derartige Ausgestaltung des Aufsatzes mit entsprechend breiter Laufoberfläche verbessert auch die Haftung beim Fahren von Kurven.

Vorteilhaft ist auch, wenn der Aufsatz ein Zusatzbefestigungselement umfasst, das ausgebildet ist, um den Aufsatz im Bereich des Lochkreises, insbesondere an dem Lochkreis und/oder an der Zentralöffnung, der Felge und/oder an einer Speiche der Felge an der Felge zu befestigen. Ein derartiges Zusatzbefestigungselement kann beispielsweise als armartige Erweiterung zum Lochkreis hin ausgebildet sein. Hierdurch wird die Befestigungssicherheit des Aufsatzes erhöht.

Vorteilhaft ist auch, wenn das Zusatzbefestigungselement lösbar oder unlösbar an dem Aufsatz befestigt ist, vorzugsweise wobei die Befestigung des Zusatzbefestigungselements derart ist, dass das Zusatzbefestigungselement gegenüber dem Aufsatz bewegbar, vorzugsweise verschiebbar und/oder verschwenkbar ist. Bei dem lösbaren Zusatzbefestigungselement kann das Zusatzbefestigungselement beispielsweise bei Beginn der Montage angebracht werden, die Befestigungseinrichtung dann fest verspannt werden und das Zusatzbefestigungselement anschließend gelöst werden. Bei einem verschiebbaren Zusatzbefestigungselement kann dieses beispielsweise ausgeschoben und zur Montage des Aufsatzes verwendet werden und nach endgültiger Montage eingeschoben werden.

Gegenstand der vorliegenden Anmeldung ist auch eine Vorrichtung zum Ermöglichen von Notlaufeigenschaften eines Fahrzeugrades, die sich dadurch kennzeichnet, dass die Vorrichtung ein erstes Stützelement, das ausgebildet ist, um an dem Fahrzeugrad auf der Fahrzeugseite angebracht zu werden, und ein zweites Stützelement umfasst, das ausgebildet ist, um an dem Fahrzeugrad auf der dem Fahrzeug abgewandten Außenseite angebracht zu werden, wobei die Stützelemente derart ausgebildet sind, dass sie, in einer an dem Fahrzeugrad vorgesehenen Montageposition, die Seitenwände des Reifens des Fahrzeugrads derart seitlich mit Druck beaufschlagen, dass eine Lauffläche des Reifens nach radial außen gedrängt wird. Die Stützelemente stützen also den Reifen seitlich derart ab, dass er trotz mangelndem Luftdruck dennoch einen Laufflächenkörper des Fahrzeugrades bilden kann und eine ausreichende Lauffläche zur Verfügung stellt.

Vorteilhafterweise weisen bei einer derartigen Vorrichtung das erste Stützelement und das zweite Stützelement jeweils Spannarme zur Befestigung der Stützelemente an der Felge des Fahrzeugrads auf, wobei die Spannarme derart ausgebildet sind und in der vorgesehenen Montageposition derart angeordnet sind, dass sie derart zwischen eine Reifenwulst des Reifens und ein Felgenbett der Felge eingreifen, dass sie die Reifenwulst vom Felgenbett abheben. Hierdurch wird der Reifen besonders effizient trotz mangelndem Luftdruck im Reifen als Laufflächenkörper verwendet.

Vorteilhafterweise umfasst eine Vorrichtung wie oben beschrieben einen Befestigungsmechanismus, der derart ausgebildet ist, dass das erste Stützelement und das zweite Stützelement beim Befestigen der Vorrichtung an dem Fahrzeugrad mittels des Befestigungsmechanismus derart gegen die Felge verspannbar sind, dass sie sich auf die Felge zu bewegen bis sie an der Felge in Anlage kommen. Hierzu kann die Vorrichtung einen Befestigungsmechanismus umfassen, der der Befestigungseinrichtung des Aufsatzes, wie oben beschrieben entspricht.

Gegenstand der vorliegenden Anmeldung ist auch ein Notrad mit einem Grundkörper, der statt einem defekten Fahrzeugrad an einem Lochkreis einer Radnabe befestigbar ist und in einer axialen Richtung gesehen kreis- oder weitestgehend kreisringförmig ausgebildet ist, wobei sich dieses Notrad dadurch kennzeichnet, dass der Grundkörper wenigstens zwei umfängliche Segmente umfasst.

Vorteilhafterweise sind die umfänglichen Segmente lösbar mit einander verbunden. Diese lösbare Verbindung kann über einen Klappmechanismus oder eine Hintergriffstruktur realisiert sein.

Der Klappmechanismus kann auch unlösbar ausgebildet sein.

Die Hintergriffstruktur zur lösbar Verbindung der umfänglichen Segmente kann einen schwalbenschwanzartig ausgebildeten Fortsatz an einem der Segmente und eine entsprechende Ausnehmung an einem weiteren der Segmente umfassen. Beim Verbinden der umfänglichen Segmente wird der schwalbenschwanzartig ausgebildeter Fortsatz in die entsprechende Ausnehmung an dem anderen Segment eingesetzt und die beiden umfänglichen Segmente beispielsweise miteinander verschraubt, um eine sichere Verbindung zwischen den umfänglichen Segmenten herzustellen.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
- Figur 1: eine erste Ausführungsform eines erfindungsgemäßen Aufsatzes;
- Figur 2: ein Befestigungsmittel schematisch;
- Figur 3: ein umfängliches Segment einer alternativen Ausführungsform des Aufsatzes;
- Figur 4: eine alternative Ausführungsform des Aufsatzes;
- Figur 5: einen Montage Prozess eines alternativen Aufsatzes;
- Figur 6: einen weiteren Montage Prozess eines alternativen Aufsatzes;
- Figur 7: eine alternative Ausführungsform des Aufsatzes;
- Figur 8: ein alternatives Befestigungsmittel schematisch;
- Figur 9: eine alternative Ausführungsform des Aufsatzes;
- Figur 10: einen Kopplungsmechanismus;
- Figur 11: eine alternative Ausführungsform des Aufsatzes;
- Figuren 12 bis 18: eine alternative Ausführungsform des Aufsatzes;
- Figuren 19 bis 22: eine alternative Ausführungsform des Aufsatzes;
- Figur 23: eine Vorrichtung, welche nicht Teil der beanspruchten Erfindung ist, zum Ermöglichen von Notlaufeigenschaften eines Fahrzeugrades;
- Figur 24: ein Notrad;
- Figur 25: eine alternative Ausführungsform eines Aufsatzes, welcher nicht Teil der beanspruchten Erfindung ist; und
- Figur 26: eine alternative Ausführungsform eines Aufsatzes, welcher nicht Teil der beanspruchten Erfindung ist.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

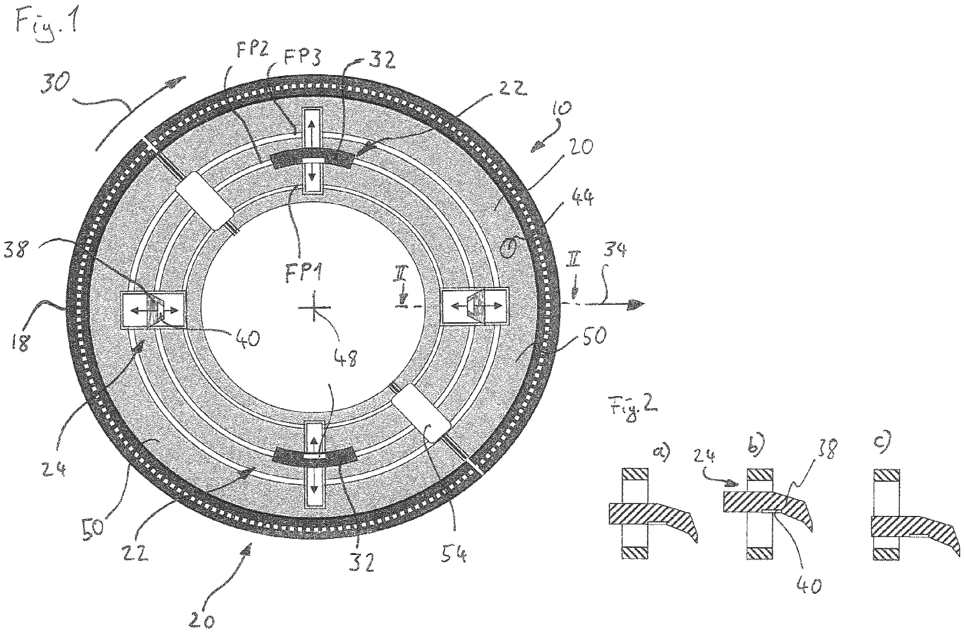

Figur 1 zeigt in schematischer Darstellung einen Aufsatz 10 für ein in Figur 1 nicht dargestelltes Fahrzeugrad 12 zur Ermöglichung eines Fahrbetriebs bei plattem Reifen 14.

Der Aufsatz 10 umfasst einen Laufflächenkörper 18, einen Grundkörper 20, eine Positioniereinrichtung 22 und eine Befestigungseinrichtung 24.

Der Laufflächenkörper 18 dient zur Kontaktierung des Aufsatzes 10 mit der Fahrbahn, wenn der Aufsatz 10 am Fahrzeugrad 12 befestigt ist.

Die Positioniereinrichtung 22 dient zur Positionierung des Aufsatzes 10 an einer Felge 26 des Fahrzeugrads 12.

Die Befestigungseinrichtung 24 dient zur Befestigung des Aufsatzes 10 an der Felge 26 des Fahrzeugrads 12, wobei die Befestigungseinrichtung 24 unabhängig von der Positioniereinrichtung 22 betätigbar ist.

Die Positioniereinrichtung 22 umfasst bei der Ausführung gemäß in Figur 1 wenigstens zwei Kontaktelemente 32. Vorzugsweise sind die Kontaktelemente 32 gleichmäßig in einer Umfangsrichtung 30 verteilt am Grundkörper 20 angeordnet.

Gemäß der Erfindung sind die Kontaktelemente 32 in radialer Richtung 34, wie in Figur 1 gezeigt, jeweils in mehreren vorgegebenen Feststellpositionen FP1, FP2 und FP3, die einem genormten Felgenhorndurchmesser entsprechen, feststellbar.

Der Aufsatz 10 ist dadurch über die Positioniereinrichtung 22 bzw. deren Kontaktelemente 32 an einer entsprechenden Felge 26 mit genormtem Felgenhorndurchmesser zentriert positionierbar.

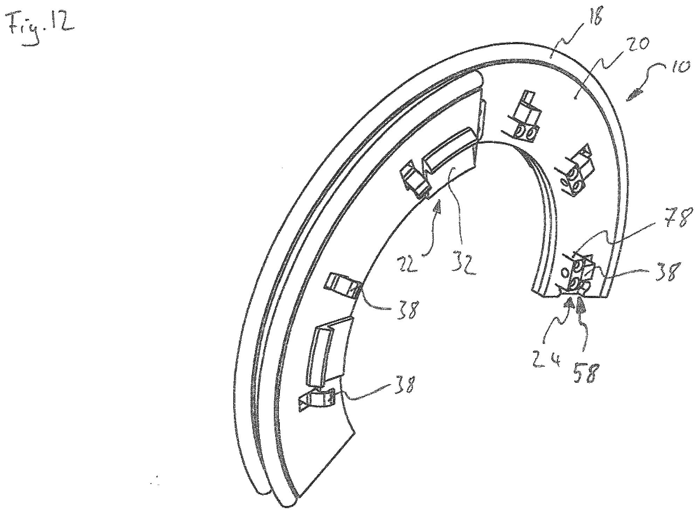

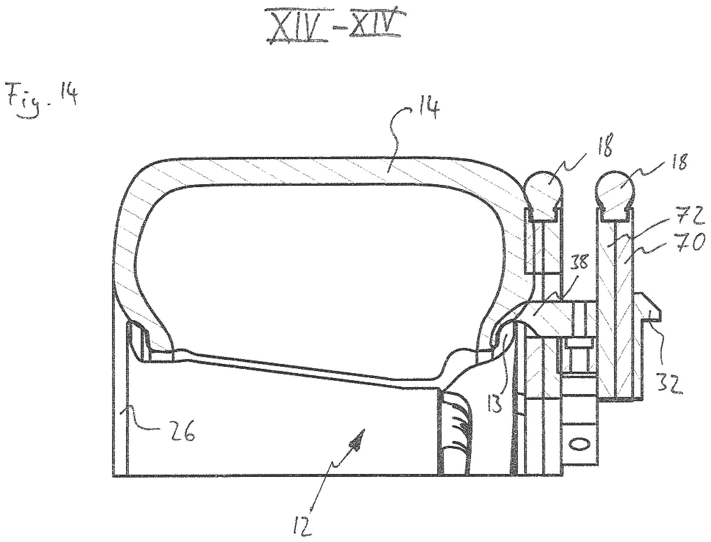

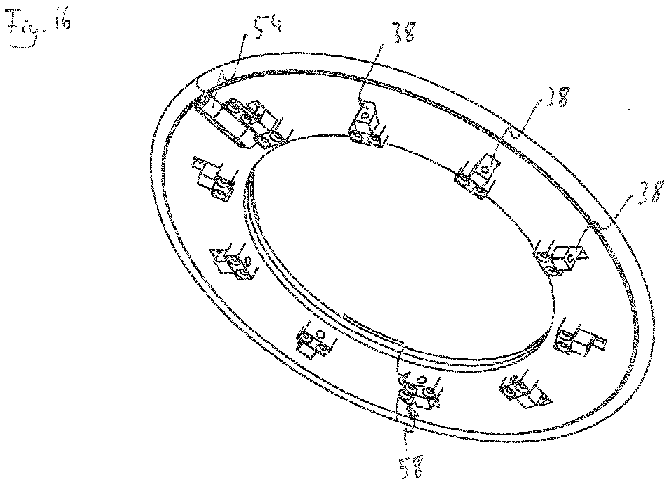

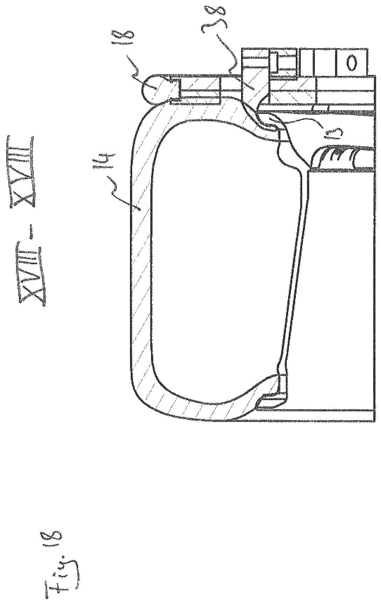

Die Positioniereinrichtung 22 kann beispielsweise schwenkbare federgespannte krallenartige Kontaktelemente 32 (siehe bspw. Figur 12 - 18) aufweisen, über die sich der Aufsatz 10 an die Felge 26, insbesondere im Bereich eines Felgenhorns 13, des Fahrzeugrads 12 gewissermaßen anclipsen lässt. Andere Ausgestaltungen der Kontaktelemente 32 bzw. der Positioniereinrichtung 22 insgesamt sind jedoch ebenso denkbar. Vorteilhafter Weise ist die Positioniereinrichtung 22 selbstzentrierend ausgebildet, womit gemeint ist, dass, selbst wenn der Aufsatz 10 nicht zentrisch auf dem Fahrzeugrad 12 positioniert wurde, die Positioniereinrichtung 22 den Aufsatz 10 in eine zentrierte Position bezüglich des Fahrzeugrads 12 überführt. Dies kann beispielsweise über eine Federvorspannung der Kontaktelemente 32 realisiert sein.

Die Kontaktelemente 32 der Positioniereinrichtung 22 können auch in oder an Befestigungsmitteln 38 der Befestigungseinrichtung 24 angeordnet sein.

Die Befestigungseinrichtung 24 im Sinne der vorliegenden Erfindung ist unabhängig von der Positioniereinrichtung 22 betätigbar. Mit Betätigen ist dabei gemeint, dass die Befestigungseinrichtung 24 derart bedient wird, dass der Aufsatz 10 über die Befestigungseinrichtung 24 fest mit dem Fahrzeugrad 12 verbunden wird. Hierzu kann die Befestigungseinrichtung 24 beispielsweise krallen- oder spannbackenartige Befestigungsmittel 38 umfassen. Die Befestigungsmittel 38 sind generell dazu ausgebildet, die Felge 26, insbesondere im Bereich des Felgenhorns 13 zu hintergreifen.

Beim Betätigen der Befestigungseinrichtung 24 hintergreifen die Befestigungsmittel 38 dann das Felgenhorn 13 und verspannen den Aufsatz 10 gegen die Felge 26. Dies kann beispielsweise durch ein Verschieben oder durch ein Verschwenken der Befestigungsmittel 38 in radialer Richtung 34 realisiert sein.

Die Betätigung der Befestigungseinrichtung 24 kann dabei über ein entsprechendes Werkzeug oder auch werkzeuglos möglich sein. Beispielsweise können die Befestigungsmittel 38 mittels eines Innensechskants bewegbar ausgebildet sein. Denkbar ist auch ein Handgriff, mittels dem die Befestigungsmittel 38 bewegbar sind. Die Bewegung kann dabei eine translatorische Bewegung oder auch ein Verschwenken umfassen.

Ein derartiges krallenartiges Befestigungsmittel 38 ist beispielsweise in Figur 2, die eine Schnittdarstellung entlang der Linie II-II zeigt, in verschiedenen Positionen schematisch dargestellt. In Figur 2 ist eine Ausführung der Befestigungsmittel 38 gezeigt, in welcher die Befestigungsmittel 38 sowohl in radialer Richtung 34 als auch in axialer Richtung 48 verschieblich sind.

Die Befestigungseinrichtung 24 kann eine Druckmesseinrichtung 40 umfassen. Vorzugweise ist eine derartige Druckmesseinrichtung 40 an einem oder mehreren der Befestigungsmittel 38 angeordnet. Eine derartige Druckmesseinrichtung 40 ist ausbildet, um die Verspannung der Befestigungseinrichtung 24 gegen die Felge 26 bzw. das Felgenhorn 13 zu erfassen. Also beispielsweise die Kraft, mit welcher die Befestigungsmittel 38 gegen das Felgenhorn 13 pressen bzw. an diesem anliegen.

In einer bevorzugten Ausführungsform umfasst der Aufsatz 10 eine Signaleinrichtung 44, die ausgebildet ist, um ein Signal abzugeben, wenn die Verspannung des Aufsatzes 10 gegenüber der Felge 26 ausreichend für einen sicheren Fahrbetrieb ist. Wenn also der Aufsatz 10 ausreichend fest an der Felge 26 befestigt ist. Vorteilhafterweise ist die Signaleinrichtung 44 hierzu mit der Druckmesseinrichtung 40 gekoppelt. Die Signaleinrichtung 44 kann zur Abgabe optischer akustischer oder haptischer Signale ausgebildet sein.

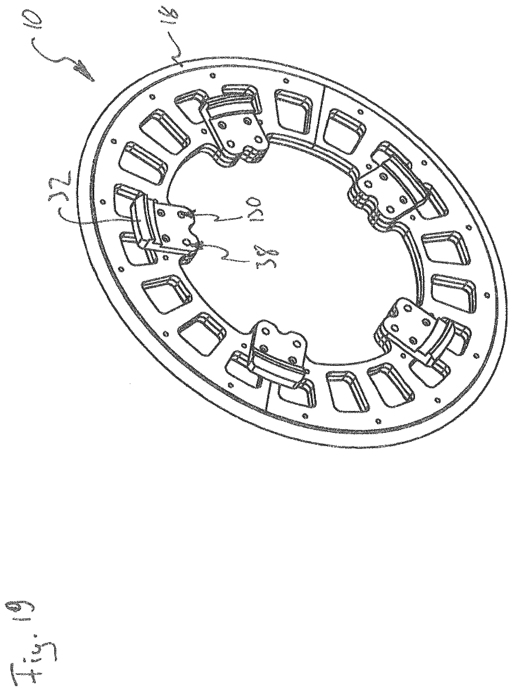

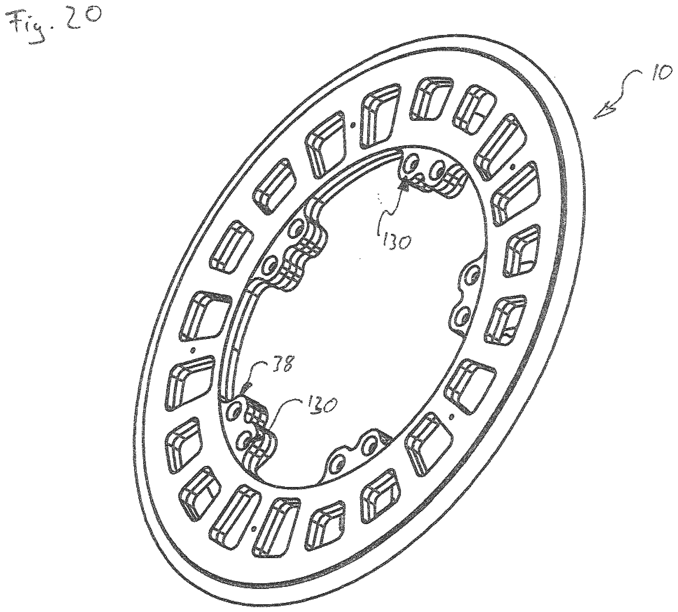

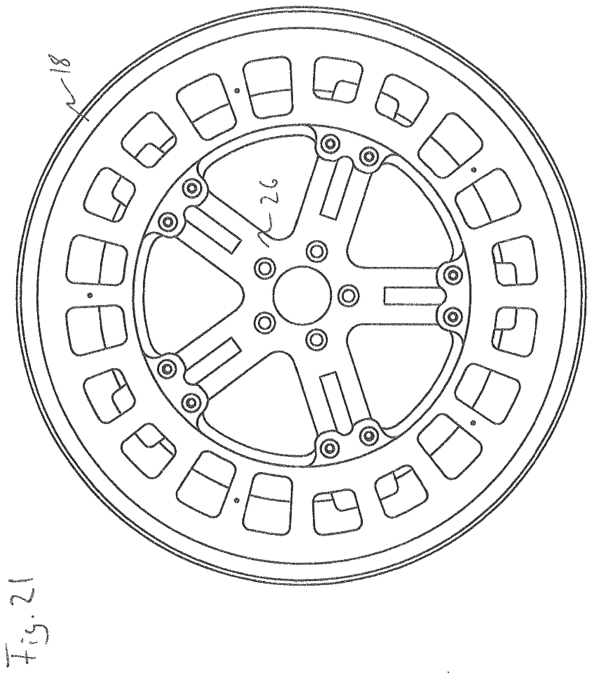

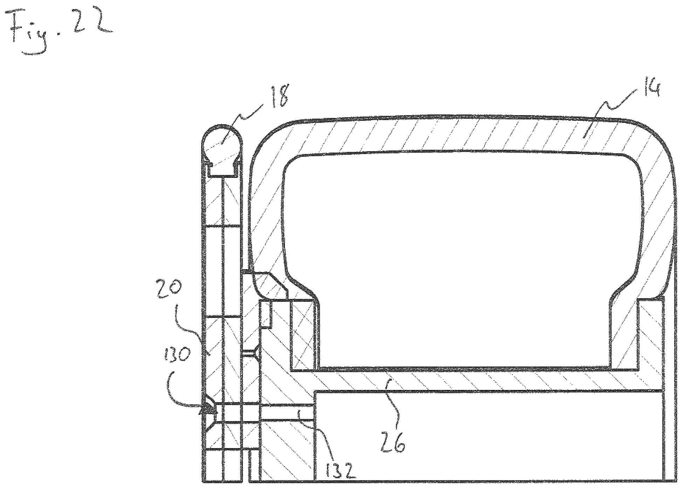

Die Befestigungsmittel 38 können auch in Form von Schrauben ausgebildet sein, welche durch entsprechende Öffnungen in dem Grundkörper 20 in entsprechende Schraubenaufnahmen an der Felge 26 eingreifen können. Eine derartige Ausführungsform ist in den Figuren 19-22 gezeigt. Bevorzugt ist jedoch, wenn die Befestigungsmittel 38 ausgebildet sind, um das Felgenhorn 13 der Felge 26 zu hintergreifen.

Der Grundkörper 20 ist in einer axialen Richtung 28 gesehen kreis- oder weitestgehend kreisringförmig (siehe beispielsweise Figur 1) ausgebildet. Damit ist gemeint, dass der Grundkörper 20 in seinem, wie beispielsweise in Figur 1 gezeigten, zusammengebauten Zustand in dem er auch am Fahrzeugrad 12 im Fahrbetreib montiert ist, die eben genannte Form aufweist.

Die Befestigung des Aufsatzes 10 am Fahrzeugrad 12 bei Betätigung der Befestigungseinrichtung 24 erfolgt bevorzugterweise derart, dass sich der Aufsatz 10 beim Betätigen der Befestigungseinrichtung 24 in axialer Richtung 48 auf die Felge 26 zu bewegt. Der Aufsatz 10 wird damit beim Betätigen der Befestigungseinrichtung 24 in gewisser Weise zur Felge 26 hin gedrängt.

Vorteilhafterweise erfolgt beim Befestigen über die Befestigungseinrichtung 24 also nicht lediglich eine Verspannung in radialer Richtung sondern auch eine Verschiebung des Aufsatzes 10 in axialer Richtung zur Felge 26 hin. Der Aufsatz 10 presst sich also in gewisser Weise in axialer Richtung 48 gesehen gegen die Felge 26. Auf diesen optionalen vorteilhaften Aspekt der Befestigung des Aufsatzes 10 wird weiter unten noch im Detail eingegangen.

Vorteilhafterweise weist weiß L die Oberfläche des Aufsatzes 10 in dem Bereich in der er mit der Felge 26 in Kontakt kommt eine nachgiebige Oberfläche, beispielsweise durch eine Gummierung realisiert, auf.

Zum Anbringen des Aufsatzes 10 an dem Fahrzeugrad 12 wird der Aufsatz 10 zunächst über die Positioniereinrichtung 22 an dem Fahrzeugrad 12 in der vorgesehenen Position positioniert. Am Beispiel des in Figur 1 gezeigten Aufsatzes 10 erfolgt dieses Positionieren über die Kontaktelemente 32, welche zuvor auf den passenden Felgendurchmesser des Fahrzeugrades 12 eingestellt wurden, bspw. indem sie in der entsprechenden Position FP 2 eingerasteten wurden. Beim vorliegenden Beispiel wird der Aufsatz 10 über die Kontaktelemente 32 quasi auf die Felge 26 aufgeclipst. Die Kontaktelemente 32 sind dafür schwenkbar und federvorgespannt gelagert. Beim Positionieren des Aufsatzes 10 auf der Felge 26 wird der Aufsatz 10 quasi auf die Felge 26 aufgesetzt bzw. an diese gehalten, dann auf die Felge 26 aufgedrückt, wobei sich die Kontaktelemente 32 gegen ihre Federvorspannung aufweiten und dann aufgrund der Federvorspannung schnappend das Felgenhorn 13 hintergreifen. Der Aufsatz 10 ist dann zentriert gegenüber der Felge 26 positioniert. Diese Positionierung des Aufsatzes 10 bietet jedoch nicht ausreichend Halt für einen Fahrbetrieb.

Im Anschluss an die Positionierung des Aufsatzes 10 mittels der Positioniereinrichtung 22 an dem Fahrzeugrad 12 erfolgt eine Befestigung des Aufsatzes 10 am Fahrzeugrad 12 über die Befestigungseinrichtung 24. Hierzu wird die Befestigungseinrichtung 24 betätigt. Beim in Figur 1 gezeigten Beispiel werden die Befestigungsmittel 38 auf das Felgenhorn 13 hin verschoben, so dass sie dieses hintergreifen. Die Befestigungsmittel 38 werden dann gegen das Felgenhorn 13 verspannt, so dass der Aufsatz 10 fest am Felgenhorn 13 bzw. an der Felge befestigt ist.

Mit anderen Worten die Positionierung über die Positioniereinrichtung 22 ist nicht ausreichend, um einen Fahrbetrieb zu gewährleisten, sondern dient lediglich der korrekten Platzierung des Aufsatzes 10 am Fahrzeugrad 12.

Ist der Aufsatz 10 über die Positioniereinrichtung 22 in der gewünschten Position am Fahrzeugrad 12 positioniert, so wird der Aufsatz 10 anschließend über die Befestigungseinrichtung 24 fest mit dem Fahrzeugrad 12 verbunden, vorzugsweise verspannt.

Die Positioniereinrichtung 22 bleibt vorteilhafterweise gegenüber der Felge 26 des Fahrzeugrads 12 unverspannt, auch wenn der Aufsatz 10 endgültig am Fahrzeugrad 12 befestigt ist.

Vorteilhafterweise ist der Grundkörper 20 des Aufsatzes 10 aus mehreren umfänglichen Segmenten 50 aufgebaut. Im Beispiel von Figur 1 sind die beiden umfänglichen Segmente 50 über Scharniere 54, die einen Klappmechanismus bilden, miteinander verbunden. Die Scharniere 54 können dabei lösbar oder unlösbar ausgeführt sein.

Statt oder zusätzlich zu den Scharnieren 54 kann auch eine Hintergriffstruktur 58 zur Verbindung der umfänglichen Segmente 50 vorgesehen sein.

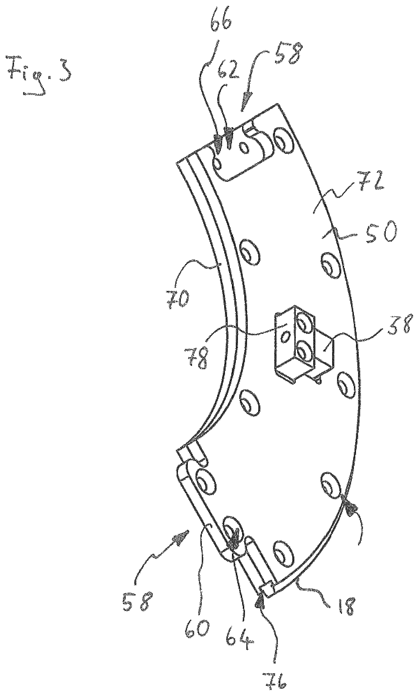

Ein umfängliches Segment 50, das über eine derartige Hintergriffstruktur 58 mit weiteren, ähnlichen umfänglichen Segmenten 50 verbindbar ist, ist beispielsweise in Figur 3 gezeigt. Die Hintergriffstruktur 58 umfasst einen schwalbenschwanzartigen Fortsatz 60, der in eine entsprechende Ausnehmung 62 einsetzbar ist.

Verbindungsschrauben können über Schraubenlöcher 64 in den schwalbenschwanzartigen Fortsatz 60 eingesetzt werden und in Schraubenaufnahmen 66 im Bereich der Ausnehmung 62 eingeschraubt werden. Die miteinander über die Hintergriffstruktur 58 verbundenen umfänglichen Segmente sind dann fest miteinander verbunden.

An dem in Figur 3 gezeigten umfänglichen Segment 50 ist gut zu erkennen, dass dieses ein felgenseitiges Teilstück 70 und ein felgenabgewandtes Teilstück 72 umfasst. Die beiden Teilstücke 70, 72 sind voneinander lösbar und über entsprechende Schraubverbindung 74 miteinander fest verbindbar.

Der Laufflächenkörper 18 kann, wenn die beiden Teilstücke 70, 72 voneinander gelöst sind, in eine entsprechende Rinne 76 zwischen den beiden Teilstücken 70, 72 eingesetzt werden, wenn die beiden Teilstücke 70,72 miteinander über die Schraubenverbindungen 74 fest verbunden werden, ist der Laufflächenkörper 18 verliersicher über einen entsprechenden Hintergriff in der Rinne 76 gehalten. Die Rinne 76 ist ein Beispiel eines Aufnahmeabschnitts.

Bei dem in Figur 3 dargestellten umfänglichen Segment 50 ist das gezeigte Befestigungsmittel 38 an einem Haltebock 78 verschieblich angebracht.

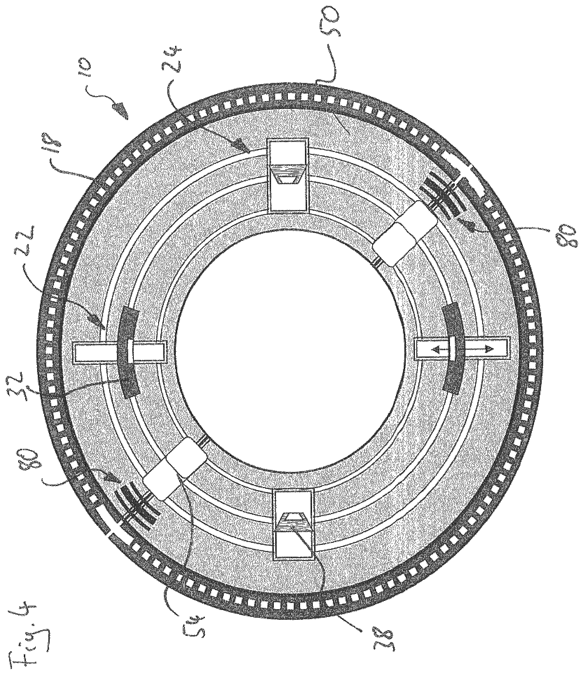

Der in Figur 4 gezeigte Aufsatz 10 ist ähnlich aufgebaut wie der Aufsatz aus Figur 1. Der Aufsatz aus Figur 4 weist jedoch Verriegelungseinrichtungen 80 auf, über die sich die umfänglichen Segmente 50 im aufgeklappt Zustand miteinander verriegeln lassen, so dass der Aufsatz 10 nicht mehr zusammengeklappt werden kann, bis die Verriegelungseinrichtungen 80 gelöst wurden.

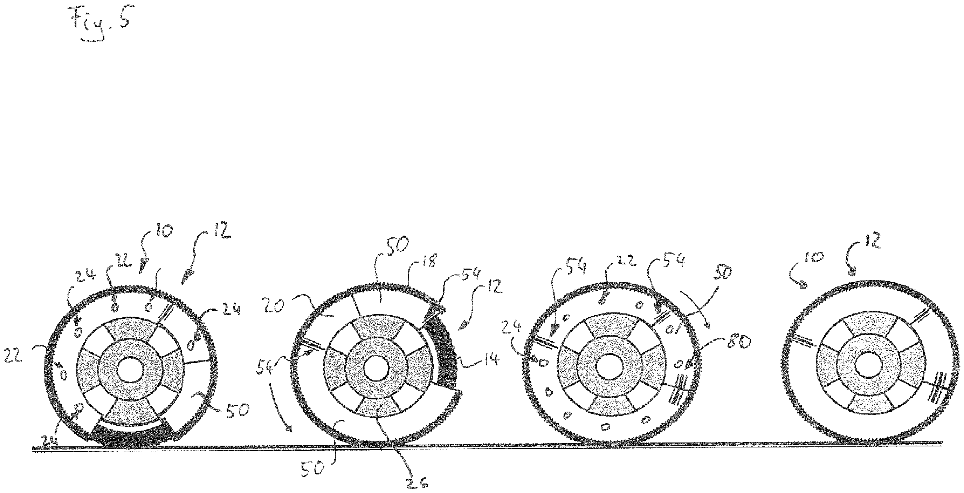

Figur 5 zeigt, wie eine Ausführungsform des Aufsatzes 10 an einem Fahrzeugrad 12 montierbar ist, ohne dass das Fahrzeugrad 12 vom Kraftfahrzeug abgenommen wird.

Zunächst wird der Aufsatz 10 über die Positioniereinrichtung 22 am Fahrzeugrad 12 positioniert. Dabei bleibt ein umfängliches Segment 50, das in Figur 5 ein entsprechendes Bezugszeichen trägt in eingeklapptem Zustand.

Der Aufsatz 10 wird dann über die Befestigungseinrichtung 24 fest am Fahrzeugrad 12 befestigt.

Die Positionierung über die Positioniereinrichtung 22 sowie die Befestigung über die Befestigungseinrichtung 24 erfolgt dabei wie oben beschrieben.

Nach dem Befestigen des Aufsatzes 10 wir das Fahrzeugrad um 90° vorwärts bewegt.

Das eingeklappte umfängliche Segment 50 wird dann ausgeklappt und über die Verriegelungseinrichtungen 80 verriegelt.

Die an dem zunächst eingeklappten umfänglichen Segment 50 angeordneten Teile der Befestigungseinrichtung 24 werden dann ebenfalls verspannt bzw. betätigt.

Die Befestigung des Aufsatzes 10 ist dann abgeschlossen und der Fahrbetrieb kann aufgenommen werden.

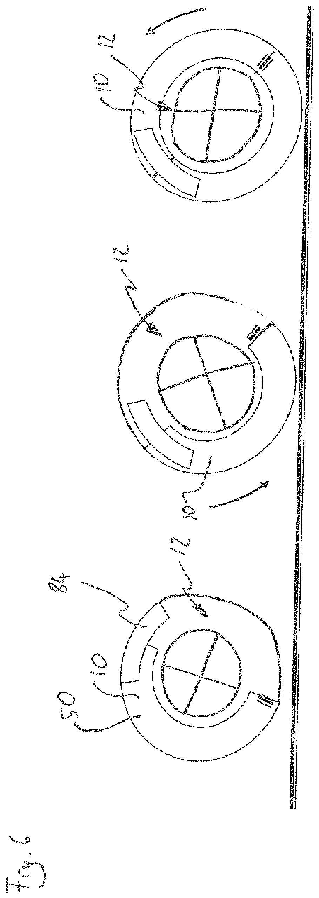

Figur 6 zeigt die Montage einer weiteren Ausführungsform, wobei in Figur 6 gezeigte Ausführungsform ein in einem umfänglichen Segmente 50 eine auszieht Ware Montagehilfe 84 aufweist. Über die Montage 84 lässt sich das zuerst am Fahrzeugrad befestigte umfängliche Segment 50 gegen das Fahrzeugrad 12 verspannen.

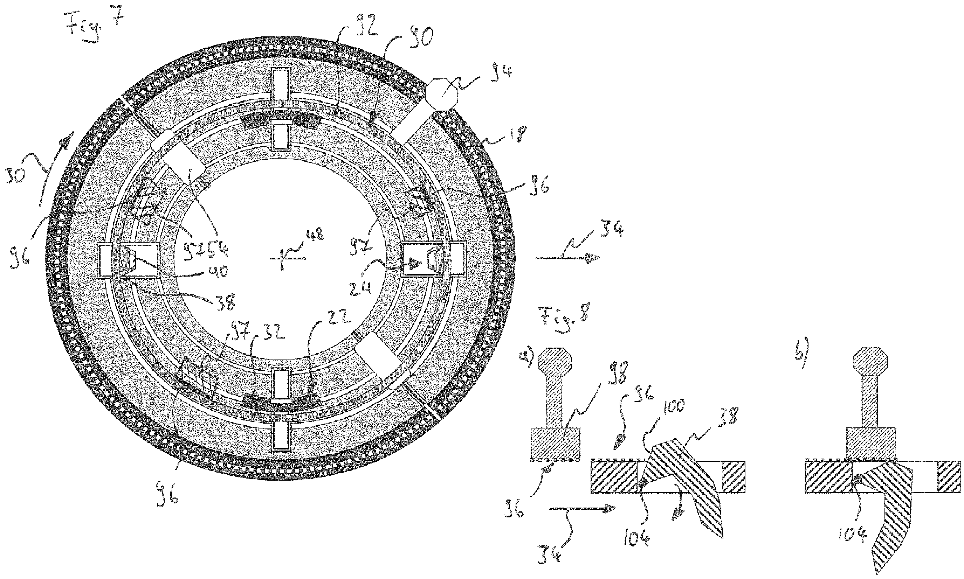

Figur 7 zeigt eine Ausführungsform des Aufsatzes 10 mit einem Kopplungsmechanismus 90, der beweglichen Befestigungsmittel 38 koppelt.

Bevorzugt ist, wenn die Befestigungseinrichtung 24 einen Kopplungsmechanismus 90 umfasst, der eine Bewegung wenigstens zweier beweglicher, vorzugsweise aller beweglichen, Befestigungsmittel 38 beim Betätigen der Befestigungseinrichtung 24 koppelt.

Wobei die Kopplung der Bewegungen kann dabei die Bewegung in radialer Richtung 34 und/oder in axialer Richtung 48 koppeln.

Vorzugsweise ist der Kopplungsmechanismus 90 derart ausgebildet, dass die Bewegung der gekoppelten beweglichen Befestigungsmittel 38 gleichförmig, also mit gleicher Geschwindigkeit, und gleich gerichtet, also mit gleicher Richtung, ist.

Die in Figur 7 gezeigte Ausführungsform des Kopplungsmechanismus 90 umfasst einen Spannring 92 mit einem Handgriff 94. Der Spannring 92 ist in Umfangsrichtung 30 rotierbar ausgebildet.

Durch eine Rotation des Spannrings 92 kann dieser in axialer Richtung 48 entlang eines Gewindes 96 das an entsprechenden Befestigungsblöcken 97 angeordnet ist bewegbar sein, wie in Figur 7 illustriert. Der Spannring 92 ist eine mögliche Ausführungsform eines Spannelements 93 ein ähnlicher Mechanismus kann über einen in radialer Richtung beweglichen Schieber 98 implementiert werden, wie in Figur 8 gezeigt.

Bei einer zur Felge 26 hin gerichteten Bewegung des Spannrings 92 aus Figur 7 können die Befestigungsmittel 38 beispielsweise derart ausgebildet und angeordnet sein, dass der Spannring 92 bei seiner axial zur Felge 26 hin gerichteten Bewegung auf abgeschrägte Flächen 100 der Befestigungsmittel 38 treffen kann, wodurch die Befestigungsmittel 38 nach radial innen schwenkbar und/oder verschiebbar sein können. Eine ähnliche Funktion ist über den Schieber 98 möglich.

Durch eine Rotation des derartigen Spannrings 92 aus Figur 7 in Umfangsrichtung 30 kann damit die Befestigungseinrichtung 24 betätigt werden. Die Befestigungsmittel 38 der Befestigungseinrichtung 24 werden bei dieser Betätigung zeitgleich und gleichförmig, bspw. über ein Verschwenken nach radial innen, gegenüber der Felge 26 verspannt. Hierzu sind die Befestigungsmittel 38 vorzugsweise über ein Gelenk 104 verschwenkbar am Aufsatz 10 angebracht.

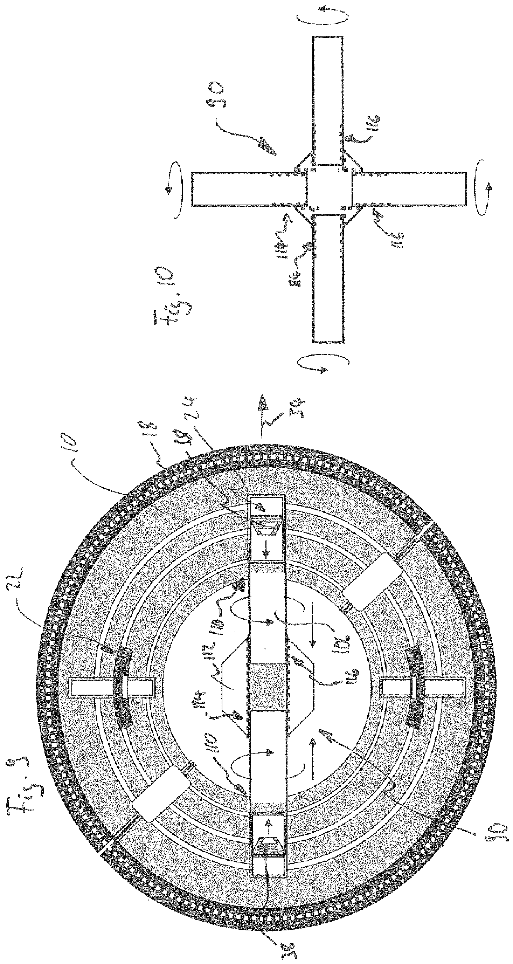

Bevorzugt ist auch, wenn der Kopplungsmechanismus 90 ein Spannelement 106 umfasst, dass wenigstens zwei Befestigungsmittel 38 miteinander verbindet oder über das wenigstens zwei Befestigungsmittel 38 miteinander verbindbar sind, wobei das Spannelement 106 in seiner Erstreckung in radialer Richtung 34 verkürzbar ausgebildet ist. Eine entsprechende Ausführungsform zeigt Figur 9.

Beispielsweise kann ein derartiges Spannelement 106 stabartig ausgebildet sein. Eine kreuzartige Ausbildung ist jedoch ebenso denkbar (Figur 10). Mit seinen beiden Enden 110 kann das Spannelement 106 mit zwei sich gegenüberliegenden Befestigungsmitteln 38 der Befestigungseinrichtung 24 verbindbar sein, beispielsweise einhakbar sein (siehe Figur 9).

Das stabartige Spannelement kann beispielsweise ein Mittelstück 112 mit gegenläufigen Gewinden 114, 116 aufweisen. In die gegenläufigen Gewinde 114, 116 können die an den Befestigungsmitteln 38 befestigbaren Enden 110 eingeschraubt sein. Durch eine Rotation des Mittelstücks 112 werden die Enden 110 entweder in das Mittelstück 112 hinein oder aus diesem herausgeschraubt, wodurch sich das stabartige Spannelement 106 entweder verlängert oder verkürzt.

Die Befestigungsmittel 38 können durch das Verkürzen des Spannelements 106 aufeinander zubewegbar sein, wodurch ein Betätigen der Befestigungseinrichtung 24 bzw. ein Spannen der Befestigungsmittel 38 gegenüber der Felge 26 realisierbar ist.

Die Befestigungsmittel 38 können alternativ auch durch ein Verlängern des Spannelements 106 nach radial innen schwenkbar sein, wodurch wiederum ein Betätigen der Befestigungseinrichtung 24 bzw. ein Spannen der Befestigungsmittel 38 gegenüber der Felge 26 realisierbar ist.

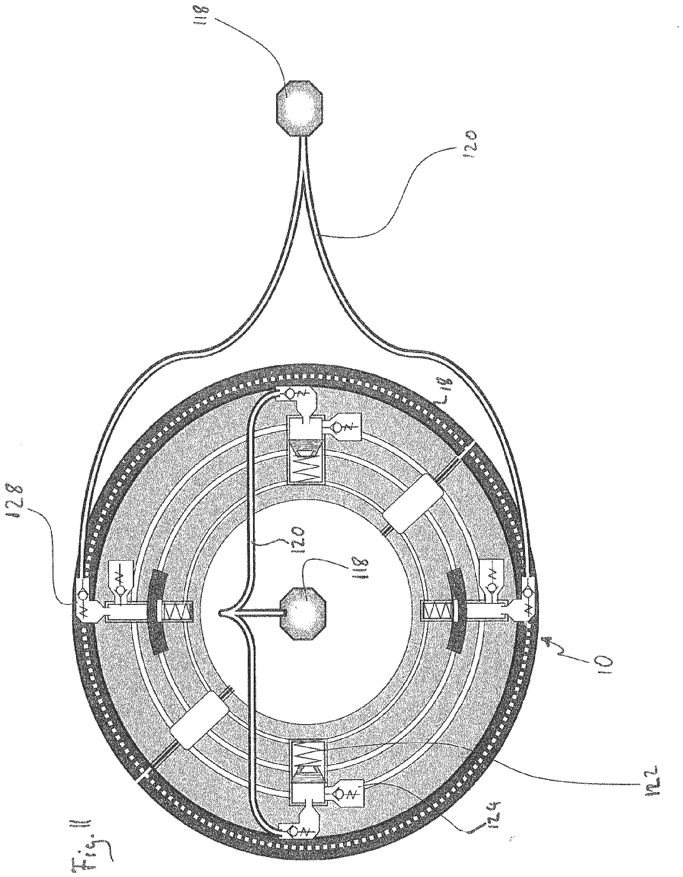

Die Befestigungseinrichtung 24 kann auch, wie in Figur 11 gezeigt über ein Druckmittel betätigbar sein.

Vorzugsweise ist auch die Positioniereinrichtung 22 über ein Druckmittel betätigbar. Vorzugsweise sind bei einer derartigen Ausführungsform die Positioniereinrichtung 22 und die Befestigungseinrichtung 24 jeweils mit Druckmittelspeichern 118 verbindbar. Entsprechende Druckmittelleitungen 120 können im Aufsatz 10 selbst oder außenliegend angeordnet sein.

Die Befestigungsmittel wie auch die Kontaktelemente können über Federn 192 gespannt sein.

Die Positioniereinrichtung 22 und die Befestigungseinrichtung 24 können als Rückschlagventile ausgebildete Entlastungsventile 124 und ebenso als Rückschlagventile ausgebildete Einlassventile 128 aufweisen.

Ein Aufsatz 10, ähnlich der Ausführungsform von Figur 5, ist in den Figuren 12-18 in verschiedenen Ansichten dargestellt.

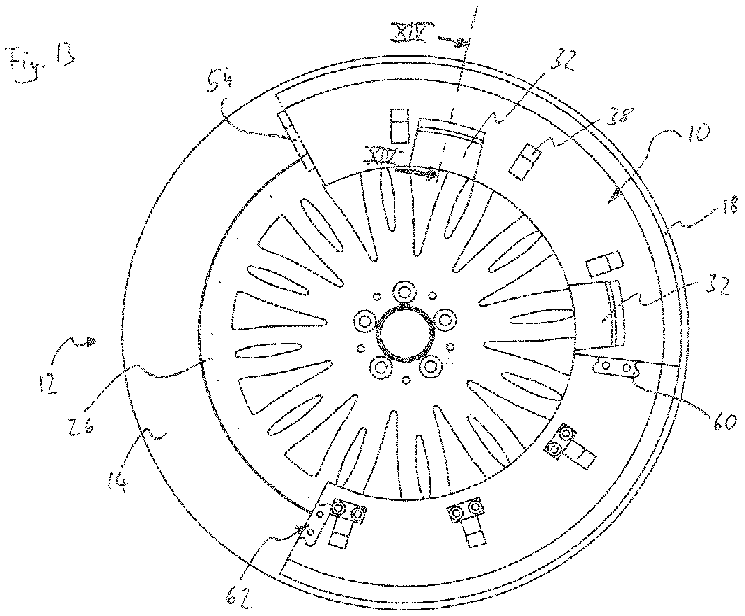

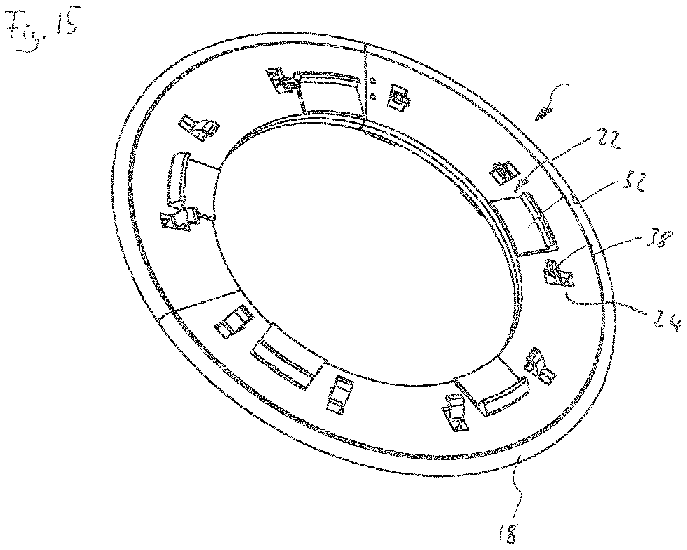

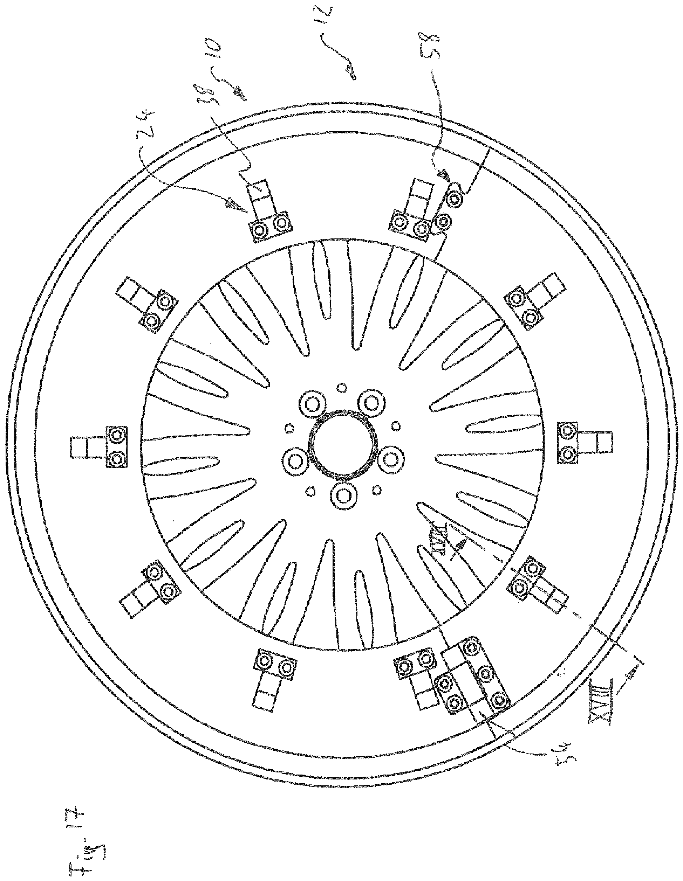

In den Figuren 12-14 ist der Aufsatz im eingeklappten Zustand gezeigt, während er in den Figuren 15-18 im ausgeklappten Zustand dargestellt ist. In den Figuren 13 und 17 ist der Aufsatz 10 jeweils im am Fahrzeugrad 12 angebrachten Zustand dargestellt.

Die Befestigungsmittel 38 können jedoch auch in Form von Schrauben ausgebildet sein, welche durch entsprechende Öffnungen 130 in dem Grundkörper 20 in entsprechende Schraubenaufnahmen 132 an der Felge 26 eingreifen können (siehe Ausführungsform gemäß Figur 19 bis 22). In diesem Fall stellt das Einschrauben dieser Schrauben die Betätigung der Befestigungseinrichtung 38 dar.

Die Befestigungseinrichtung 24 kann mehrere lösbare Befestigungsmittel 38 umfassen. Die in mehreren radial versetzten Positionen, entsprechend genormten Felgenhorndurchmessern anbringbar sind. Bevorzugt ist die in radialer Richtung bewegliche Anbringung der Befestigungsmittel 38.

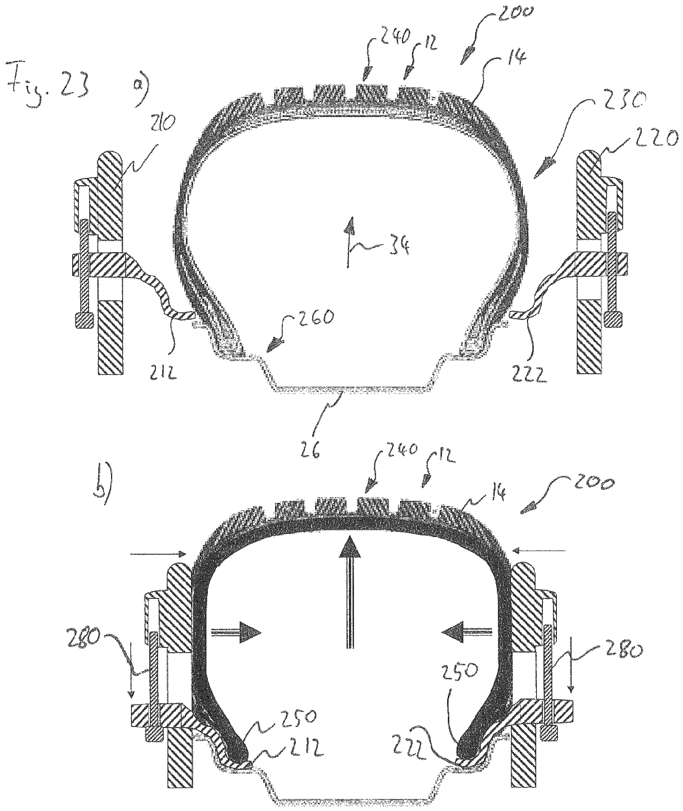

Figur 23 zeigt eine Vorrichtung 200 zum Ermöglichen von Notlaufeigenschaften eines Fahrzeugrades 12, welche nicht Teil der beanspruchten Erfindung ist Die Vorrichtung 200 umfasst ein erstes Stützelement 210, das ausgebildet ist, um an dem Fahrzeugrad 12 auf der Fahrzeugseite angebracht zu werden, und ein zweites Stützelement 220, das ausgebildet ist, um an dem Fahrzeugrad 12 auf der dem Fahrzeug abgewandten Außenseite 230 angebracht zu werden. Die Stützelemente 210, 220 sind derart ausgebildet, dass sie in einer an dem Fahrzeugrad 12 vorgesehenen Montageposition (siehe Figur 23 b)) die Seitenwände des Reifens 14 des Fahrzeugrads 12 derart seitlich mit Druck beaufschlagen, dass eine Lauffläche 240 des Reifens 14 nach radial außen gedrängt wird.

Das erste Stützelement 210 und das zweite Stützelement 220 weisen jeweils Spannarme 212, 222 zur Befestigung der Stützelemente 210, 220 an der Felge 26 des Fahrzeugrads 12 auf. Die Spannarme 212, 222 sind derart ausgebildet und in der vorgesehenen Montageposition (Figur 23 b))derart angeordnet, dass sie derart zwischen eine Reifenwulst 250 des Reifens 14 und ein Felgenbett 260 der Felge 26 eingreifen, dass sie die Reifenwulst 250 vom Felgenbett 260 abheben.

Die Vorrichtung 200 umfasst einen Befestigungsmechanismus 280, der derart ausgebildet ist, dass das erste Stützelement 210 und das zweite Stützelement 220 beim Befestigen der Vorrichtung 200 an dem Fahrzeugrad 12 mittels des Befestigungsmechanismus 280 derart gegen die Felge 26 verspannbar sind, dass sie sich auf die Felge 26 zu bewegen bis sie an dieser in Anlage kommen.

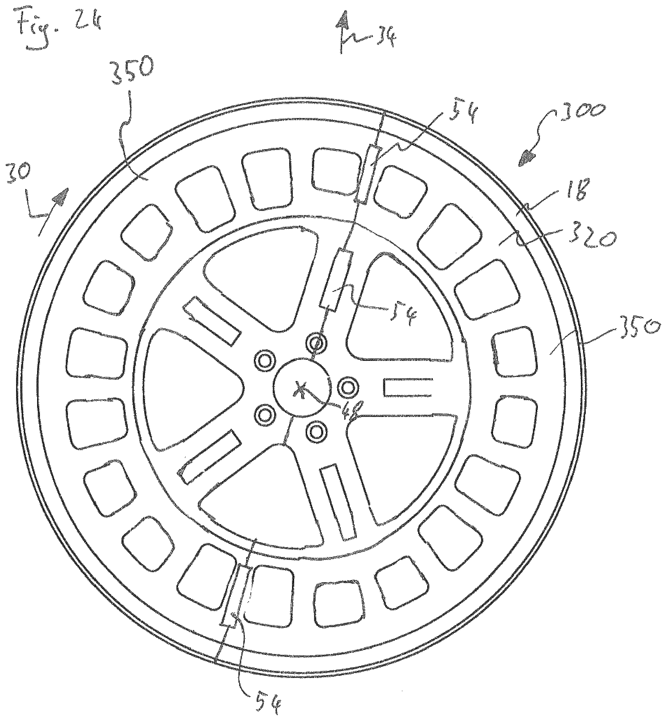

Figur 24 zeigt ein Notrad 300, welches nicht Teil der beanspruchten Erfindung ist, mit einem Grundkörper 320, der statt einem defekten Fahrzeugrad 12 an einem Lochkreis einer Radnabe befestigbar ist und in einer axialen Richtung 48 gesehen kreis- oder weitestgehend kreisringförmig ausgebildet ist, wobei der Grundkörper 320 zwei umfängliche Segmente 350 umfasst. Eine Unterteilung in mehr umfängliche Segmente 350 ist denkbar.

Das Notrad 320 ist derart ausgeführt, dass die umfänglichen Segmente 350 über einen lösbaren, Klappmechanismus 54 in umfänglicher Richtung 34, miteinander verbunden sind. Zusätzlich oder alternativ ist auch die Verbindung über eine Hintergriffstruktur, vorzugsweise mit einem schwalbenschwanzartig ausgebildeten Fortsatz an einem der Segmente und einer entsprechenden Ausnehmung an einem weiteren der Segmente 50 möglich, ähnlich dem Aufsatz aus Figur 3.

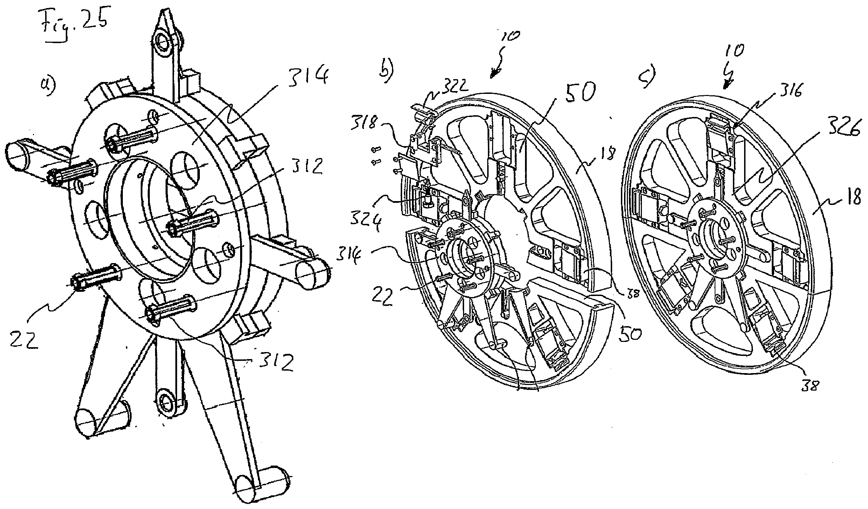

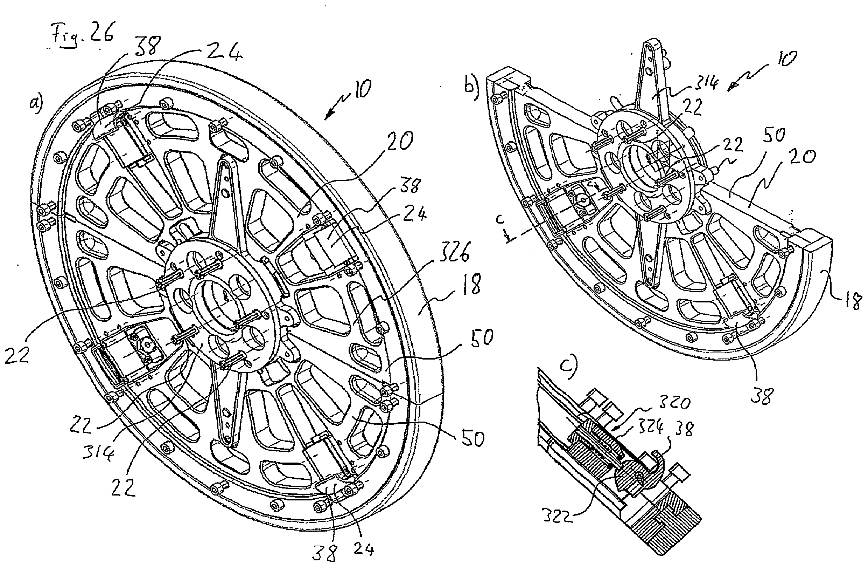

Figur 25 und 26 zeigen alternative Ausführungsformen von Aufsätzen 10, welche nicht Teil der beanspruchten Erfindung sind . Der jeweilige Aufsatz 10 umfasst einen Grundkörper 20, der zwei umfängliche Segmente 50 umfasst.

Der Aufsatz 10 umfasst Positioniereinrichtungen 22, die als Greifeinrichtungen 312 ausgebildet sind, um über einen formschlüssigen Hintergriff der Greifeinrichtungen 312 mit einer, vorzugsweise kreisrunden, Öffnung in der Felge 26, die im Bereich des Lochkreises angeordnet ist, am Fahrzeugrad 12 positioniert zu werden, wobei die Öffnung zu Löchern, die zur Aufnahme von Radschrauben bzw. Stehbolzen in der Felge 26 vorgesehen sind, beabstandet in der Felge 26 angeordnet ist, vorzugsweise wobei die Öffnung eine Mittenöffnung der Felge 26 ist oder zu einer Drehachse der Felge beabstandet ist. Insbesondere ist es vorteilhaft, wenn die Öffnung im Bereich des Lochkreises eine sogenannte Polykontrollbohrung ist, die zur Achsvermessung dient.

Die Greifeinrichtungen 312 kann auch ausgebildet sein, um über einen kraftschlüssigen Eingriff in die oben genannte Öffnung, insbesondere die Polykontrollbohrung, den Aufsatz 10 am Fahrzeugrad 12 zu positionieren.

Der Aufsatz 10 umfasst des Weiteren einen Initialmontageabschnitt 314.

Die Aufsätze 10 aus Figur 25 und 26 sind derart ausgebildet, dass der Aufsatz 10 einen Laufflächenabschnitt 326, der die beiden umfänglichen Segmente 50 des Aufsatzes 10 umfasst, aufweist, und wobei der Aufsatz 10 einen Initialmontageabschnitt 314 umfasst, wobei wenigstens ein Teil des Laufflächenabschnitts 326 separat von dem Initialmontageabschnitt 314 und mit diesem lösbar verbindbar ausgebildet ist oder gegenüber diesem beweglich ausgebildet ist, und wobei der Initialmontageabschnitt 314 radial innenliegend von der Lauffläche angeordnet ist, wenn der Aufsatz 10 am Fahrzeugrad 12 befestigt ist.

Vorzugsweise ist der Aufsatz 10 derart ausgebildet, dass der Initialmontageabschnitt 314 und der Laufflächenabschnitt 326, also der die Lauffläche des Aufsatzes 10 umfassende Teil des Aufsatzes 10, separat und vollständig voneinander lösbar ausgebildet sind. Vorzugsweise umfasst der Laufflächenabschnitt 326 wiederum genau zwei voneinander lösbare umfängliche Segmente 50, die derart zusammensetzbar sind, dass sie die kreisförmige Lauffläche bilden.

Vorzugsweise ist jedenfalls ein Teil der Greifeinrichtung 312 unlösbar mit dem Aufsatz 10, vorzugsweise dem Initialmontageabschnitt 314 verbunden. Hierdurch kann der Aufsatz 10 bzw. der Initialmontageabschnitt 314 besonders einfach am Fahrzeugrad 12 befestigt werden. Der Aufsatz 10 bzw. der Initialmontageabschnitt 314 des entsprechend ausgebildeten Aufsatzes 10 kann quasi in diese Öffnungen eingesteckt werden.

Die Befestigungsmittel 38 der Befestigungseinrichtung 24 sind bevorzugt als Fertigteil 316 ausgebildet, das an den Aufsatz 10 angeschraubt ist. Das ist bei den Aufsätzen 10 der Figuren 25 und 26 der Fall.

Vorzugsweise umfasst das jeweilige Befestigungsmittel 38 eine Einschalung 318. Diese ist in der Explosionsdarstellung von Figur 25 b) gut zu sehen.

Vorzugsweise umfasst die Befestigungseinrichtung 24 auch einen Verriegelungsmechanismus 320.

Vorzugsweise umfasst der Aufsatz einen Verriegelungsmechanismus 320, der ausgebildet und angeordnet ist, um das Befestigungsmittel 38, insbesondere ein schwenkbar gelagertes Hakenelement 322 des Befestigungsmittels 38, zu verriegeln, wenn es sich im Hintergriff mit dem Felgenhorn 13 befindet, vorzugsweise wobei der Verriegelungsmechanismus 320 ein, vorzugsweise vorgespanntes, insbesondere federvorgespanntes, Rastelement 324 umfasst. Bevorzugt ist, wenn das Rastelement 324 rastend in das Hakenelement 322 eingreift oder das Hakenelement 322 rastend in das Rastelement 324 eingreift, wenn der Verriegelungsmechanismus 320 das Befestigungsmittel 38 verriegelt. Hierdurch ist die Befestigung des Aufsatzes 10 an der Felge 12 besonders sicher. Insbesondere kann das Rastelement 324 in Form eines, insbesondere über eine Feder, vorgespannten Bolzens ausgeführt sein, wobei das schwenkbar gelagerte Hakenelement 322 beispielsweise eine Ausnehmung aufweisen kann, in die der federvorgespannte Bolzen eingreift und dieses verriegelt, wenn das Hakenelement 322 in die Hintergriffstellung mit der Felge 12 geschwenkt ist. Hierzu ist vorteilhafterweise diese Ausnehmung derart angeordnet, dass sie in der Hintergriffstellung über das Rastelement 324 schwenkt, so dass das Rastelement 324 in die Ausnehmung einfahren kann.

Vorzugsweise ist auch der Verriegelungsmechanismus 320 in der Einschalung 318 angeordnet. Der Verriegelungsmechanismus 320 und das Befestigungsmittel 38 können also, jedenfalls teilweise, in einer Einschalung 318 angeordnet sein, die eine Art Gehäuse für diese Komponenten bildet. Bevorzugt ist, wenn diese Einschalung 318 bzw. dieses Gehäuse mit den darin befindlichen Komponenten einzeln zusammenbaubar ist und dann die fertig vormontierte Einheit als Fertigteil 316 an den Aufsatz 10, montierbar bzw. montiert ist.

## Patentansprüche

1. Aufsatz (10) für ein Fahrzeugrad (12) zur Ermöglichung eines Fahrbetriebs bei plattem Reifen (14) mit einem Grundkörper (20), der in einer axialen Richtung (48) gesehen kreis- oder weitestgehend kreisringförmig ausgebildet ist, wobei der Aufsatz (10) eine Positioniereinrichtung (22) zur Positionierung des Aufsatzes (10) an einer Felge (26) des Fahrzeugrads (12) und eine von der Positioniereinrichtung (22) unabhängig betätigbare Befestigungseinrichtung (24) zur Befestigung des Aufsatzes (10) an der Felge (26) des Fahrzeugrads (12) aufweist,
wobei die Positioniereinrichtung (22) wenigstens zwei Kontaktelemente (32) umfasst, die jeweils in mehreren vorgegebenen Feststellpositionen (FP1, FP2, FP3), die einem genormten Durchmesser eines Felgenhorns (13) entsprechen, feststellbar sind, um den Aufsatz (10) an einer entsprechenden Felge (26) mit genormtem Felgenhorndurchmesser zentriert zu positionieren, und
wobei die Kontaktelemente in den jeweils dem entsprechenden Felgenhorndurchmesser zugeordneten Feststellpositionen einrastbar sind, so dass der Aufsatz dann auf der Felge anbringbar und/oder aufclipsbar ist.

2. Aufsatz (10) für ein Fahrzeugrad (12) nach Anspruch 1, **dadurch gekennzeichnet,**
**dass** die Befestigungseinrichtung (24) wenigstens eine Druckmesseinrichtung (40) umfasst, die ausbildet ist, um eine Verspannung der Befestigungseinrichtung (24) gegen die Felge (26), vorzugsweise das Felgenhorn (13), zu erfassen.

3. Aufsatz (10) für ein Fahrzeugrad (12) nach Anspruch 1, **dadurch gekennzeichnet, dass** die Befestigungseinrichtung (24) wenigstens ein, ggf. mehrere, lösbare Befestigungsmittel (38) umfasst und/oder wenigstens ein, ggf. mehrere, in radialer Richtung beweglich, insbesondere verschieblich, angebrachte oder anbringbare Befestigungsmittel (38) umfasst.

4. Aufsatz (10) für ein Fahrzeugrad (12) nach dem vorangegangenen Anspruch, **dadurch gekennzeichnet, dass** die Befestigungseinrichtung (24) einen Kopplungsmechanismus (90) umfasst, der eine Bewegung wenigstens zweier beweglicher, vorzugsweise aller beweglichen, Befestigungsmittel (38) beim Betätigen, vorzugsweise verspannen, der Befestigungseinrichtung (28) in radialer Richtung (34) und/oder in axialer Richtung (48) koppelt, vorzugsweise wobei der Kopplungsmechanismus (90) derart ausgebildet ist, dass die Bewegung der gekoppelten beweglichen Befestigungsmittel (38) gleichförmig ist.

5. Aufsatz (10) für ein Fahrzeugrad (12) nach dem vorangegangenen Anspruch, **dadurch gekennzeichnet, dass** der Kopplungsmechanismus (90) einen Spannring (92) umfasst, der über eine Rotation in Umfangsrichtung (30), vorzugsweise über ein Gewinde (96), in axialer Richtung (48) bewegbar ist, wobei die Befestigungseinrichtung (24) über eine Bewegung des Spannrings (92) in axialer Richtung (48) betätigbar ist, vorzugsweise die Befestigungsmittel (38) über eine Bewegung des Spannrings (92) in axialer Richtung (48) nach radial innen schwenkbar sind.

6. Aufsatz (10) für ein Fahrzeugrad (12) nach Anspruch 4, **dadurch gekennzeichnet, dass** der Kopplungsmechanismus (90) ein Spannelement (106) umfasst, dass wenigstens zwei Befestigungsmittel (38) miteinander verbindet oder über das wenigstens zwei Befestigungsmittel (38) miteinander verbindbar sind, wobei das Spannelement (106) in seiner Erstreckung in radialer Richtung (34) verkürzbar oder verlängerbar ausgebildet ist, wobei die Befestigungseinrichtung (24) über eine Verkürzung oder Verlängerung des Spannelements (106) betätigbar ist.

7. Aufsatz (10) für ein Fahrzeugrad (12) nach einem der vorangegangenen Ansprüche, **dadurch gekennzeichnet, dass** die Befestigungseinrichtung (24) und/oder die Positioniereinrichtung (22) pneumatisch oder hydraulisch betätigbar ist, vorzugsweise wobei die Befestigungseinrichtung (24) und/oder die Positioniereinrichtung (22) eine Druckmittelquelle (118) umfassen oder Anschlüsse (128) umfassen mit der sie mit einer Druckmittelquelle (118) verbindbar sind.

8. Aufsatz (10) für ein Fahrzeugrad (12) nach einem oder mehreren der vorangegangenen Ansprüche, **dadurch gekennzeichnet, dass** die Befestigungseinrichtung (24) derart ausgebildet ist, dass sie, insbesondere über Kontaktabschnitte, die vorzugsweise an den Befestigungsmitteln (38) angeordnet sind, die Felge (26), insbesondere das Felgenhorn (13), auf wenigstens einem Sechstel, vorzugsweise einem Viertel, vorzugsweise einem Drittel, vorzugsweise der Hälfte, deren, bzw. dessen, umfänglicher Erstreckung kontaktiert, wenn der Aufsatz (10) an dem Fahrzeugrad (12) befestigt ist.

9. Aufsatz (10) für ein Fahrzeugrad (12) nach einem oder mehreren der vorangegangenen Ansprüche, **dadurch gekennzeichnet, dass** die Befestigungseinrichtung (24), vorzugsweise das Befestigungsmittel (38), derart ausgebildet ist, dass der Aufsatz (10) beim Befestigen und Verspannen an der Felge (26) des Fahrzeugrads (12) in axialer Richtung (48) zur Felge (26) hin gedrängt wird.

10. Aufsatz (10) für ein Fahrzeugrad (12) nach einem oder mehreren der vorangegangenen Ansprüche, **dadurch gekennzeichnet, dass** die Befestigungseinrichtung (24), eine in axialer Richtung (48) gesehen nach radial innen, vorzugsweise linear oder bogenförmig, abfallende Spannfläche umfasst, wobei die Befestigungseinrichtung (24) derart ausgebildet ist, dass sich die Spannfläche beim Befestigen und Verspannen des Aufsatzes (10) an der Felge (26) nach radial innen bewegt, insbesondere verschiebt, und die Spannfläche derart ausgebildet ist, dass der Aufsatz (10) beim Befestigen und Verspannen an der Felge (26) des Fahrzeugrads (12) in axialer Richtung (48) zur Felge (26) hin gedrängt wird.

11. Aufsatz (10) für ein Fahrzeugrad (12) nach einem oder mehreren der vorangegangenen Ansprüche, **dadurch gekennzeichnet, dass** der Grundkörper (20) ein felgenseitiges Teilstück (70) und ein von diesem lösbares felgenabgewandtes Teilstück (72) umfasst.

12. Aufsatz (10) für ein Fahrzeugrad (12) nach einem oder mehreren der vorangegangenen Ansprüche, **dadurch gekennzeichnet, dass** der Grundkörper (20), bzw. ggf. jeweils das felgenseitige Teilstück (70) und das felgenabgewandte Teilstück (72), wenigstens zwei umfängliche Segmente (50) umfasst bzw. umfassen.

13. Aufsatz (10) für ein Fahrzeugrad (12) nach dem vorangegangenen Anspruch, **dadurch gekennzeichnet, dass** die umfänglichen Segmente (50), vorzugsweise lösbar, miteinander, insbesondere über einen, vorzugsweise lösbaren, Klappmechanismus (54) oder eine Hintergriffstruktur (58), vorzugsweise die einen schwalbenschwanzartig ausgebildeten Fortsatz (60) an einem der Segmente und eine entsprechende Ausnehmung (62) an einem weiteren der Segmente (50) umfasst, in umfänglicher Richtung (30), miteinander verbunden sind.

14. Aufsatz (10) für ein Fahrzeugrad (12) nach einem der 3 vorangegangenen Ansprüche, **dadurch gekennzeichnet, dass** das felgenseitige Teilstück (70) und das felgenabgewandte Teilstück (72), bzw. je ein Segment (50) des felgenseitigen Teilstücks (70) und des felgenabgewandten Teilstücks (72), im zusammengesetzten Zustand einen Aufnahmeabschnitt (76) bilden, in dem ein Laufflächenkörper (18), bzw. ein Segment eines Laufflächenkörpers (18), beim Zusammensetzen in den zusammengesetzten Zustand formschlüssig, insbesondere über einen formschlüssigen Hintergriff, gehalten einsetzbar ist.

## Claims

1. An attachment (10) for a vehicle wheel (12) for enabling driving operation with a flat tire (14), having a base body (20) which, when seen in an axial direction (48), is circular or largely annular in shape, wherein the attachment (10) has a positioning device (22) for positioning the attachment (10) on a rim (26) of the vehicle wheel (12) and a fastening device (24), which is adapted to be actuated independently of the positioning device (22), for fastening the attachment (10) to the rim (26) of the vehicle wheel (12), wherein the positioning device (22) comprises at least two contact elements (32), each of which contact elements is adapted to be fixed in a plurality of specified fixing positions (FP1, FP2, FP2), which correspond to a standardized diameter of a rim flange (13), in order to position the attachment (10) in a centered manner on a corresponding rim (26) with a standardized rim flange diameter, and wherein the contact elements are lockable in each of said fixing positions associated with the corresponding rim flange diameter, so that the attachment can then be mounted or chipped onto the rim.

2. The attachment (10) for a vehicle wheel (12) as claimed in claim 1, **characterized in that** the fastening device (24) comprises at least one pressure measuring device (40) which is configured to detect a clamping of the fastening device (24) against the rim (26), preferably against the rim flange (13).

3. The attachment (10) for a vehicle wheel (12) as claimed in claim 1, **characterized in that** the fastening device (24) comprises at least one detachable fastening means (38), preferably a plurality of detachable fastening means, and/or at least one fastening means (38), preferably a plurality of fastening means, which is/are mounted or can be mounted so as to be movable, in particular displaceable, in the radial direction.

4. The attachment (10) for a vehicle wheel (12) as claimed in the preceding claim, wherein the fastening device (24) comprises a coupling mechanism (90) which on actuation, preferably clamping, couples a movement of at least two movable fastening means (38), preferably of all the movable fastening means, of the fastening device (28) in the radial direction (34) and/or in the axial direction (48), preferably wherein the coupling mechanism (90) is so configured that the movement of the coupled movable fastening means (38) is uniform.

5. The attachment (10) for a vehicle wheel (12) as claimed in the preceding claim, wherein the coupling mechanism (90) comprises a clamping ring (92) which is movable in the axial direction (48) *via* a rotation in the circumferential direction (30), preferably *via* a thread (96), wherein the fastening device (24) can be actuated *via* a movement of the clamping ring (92) in the axial direction (48), preferably the fastening means (38) can be pivoted radially inwards *via* a movement of the clamping ring (92) in the axial direction (48).

6. The attachment (10) for a vehicle wheel (12) as claimed in claim 4, wherein the coupling mechanism (90) comprises a clamping element (106) which connects at least two fastening means (38) together or *via* which at least two fastening means (38) can be connected together, wherein the clamping element (106) is so configured that it can be shortened or lengthened in its extent in the radial direction (34), wherein the fastening device (24) can be actuated by shortening or lengthening the clamping element (106).

7. The attachment (10) for a vehicle wheel (12) as claimed in any one of the preceding claims, wherein the fastening device (24) and/or the positioning device (22) is pneumatically or hydraulically actuatable, preferably wherein the fastening device (24) and/or the positioning device (22) comprise a pressure medium source (118) or comprise connections (128) with which they can be connected to a pressure medium source (118).

8. The attachment (10) for a vehicle wheel (12) as claimed in one or more of the preceding claims, wherein the fastening device (24) is so configured that, in particular *via* contact portions which are preferably arranged on the fixing means (38), it contacts the rim (26), in particular the rim flange (13), over at least a sixth, preferably a quarter, preferably a third, preferably half, of its circumferential extent when the attachment (10) is fastened to the vehicle wheel (12).

9. The attachment (10) for a vehicle wheel (12) as claimed in one or more of the preceding claims, wherein the fastening device (24), preferably the fastening means (38), is so configured that the attachment (10), when fastened and clamped to the rim (26) of the vehicle wheel (12), is urged in the axial direction (48) towards the rim (26).

10. The attachment (10) for a vehicle wheel (12) as claimed in one or more of the preceding claims, wherein the fastening device (24) comprises a clamping surface which, when seen in the axial direction (48), slopes radially inwards, preferably in a linear or arcuate manner, wherein the fastening device (24) is so configured that the clamping surface, on fastening and clamping of the attachment (10) to the rim (26), moves, in particular is displaced, radially inwards, and the clamping surface is so configured that the attachment (10), on fastening and clamping to the rim (26) of the vehicle wheel (12), is urged in the axial direction (48) towards the rim (26).

11. The attachment (10) for a vehicle wheel (12) as claimed in one or more of the preceding claims, wherein the base body (20) comprises a rim-side part (70) and a part (72) which faces away from the rim and is detachable from the rim-side part.

12. The attachment (10) for a vehicle wheel (12) as claimed in one or more of the preceding claims, wherein the base body (20), or optionally each of the rim-side part (70) and the part (72) facing away from the rim, comprises or comprise at least two circumferential segments (50).

13. The attachment (10) for a vehicle wheel (12) as claimed in the preceding claim, wherein the circumferential segments (50) are connected together in the circumferential direction (30), preferably detachably, in particular *via* a preferably detachable folding mechanism (54) or an engagement structure (58), preferably which comprises a dovetail-shaped prolongation (60) on one of the segments and a corresponding recess (62) on a further of the segments (50).

14. The attachment (10) for a vehicle wheel (12) as claimed in any one of the preceding 3 claims, wherein the rim-side part (70) and the part (72) facing away from the rim, or in each case a segment (50) of the rim-side part (70) and of the part (72) facing away from the rim, in the assembled state form a receiving portion (76) in which a tread body (18), or a segment of a tread body (18), can be inserted in an interlocking manner, in particular held by interlocking engagement, on assembly into the assembled state.

## Revendications

1. Garniture (10) pour une roue de véhicule (12) permettant une condition de roulage du véhicule lorsqu'un pneu (14) est à plat, comprenant un corps de base (20) qui, observé dans une direction axiale (48), est conçu en forme de cercle ou en grande partie en forme de bague annulaire, la garniture (10) présentant un dispositif de positionnement (22) destiné à positionner la garniture (10) sur une jante (26) de la roue de véhicule (12) et un dispositif de fixation (24) actionnable indépendamment du dispositif de positionnement (22) destiné à fixer la garniture (10) sur la jante (26) de la roue de véhicule (12),
dans laquelle le dispositif de positionnement (22) comprend au moins deux éléments de contact (32) qui peuvent être réglés respectivement dans plusieurs positions de réglage prédéfinies (FP1, FP2) qui correspondent à un diamètre standard d'un rebord de la jante (13), pour positionner de manière centrée la garniture (10) sur une jante correspondante (26) ayant un diamètre de rebord de jante standard, et
dans laquelle les éléments de contact peuvent venir s'engager dans les positions de réglage respectives associées au diamètre de rebord de jante standard correspondant, afin que la garniture puisse venir être appliquée ensuite sur la jante et/ou s'y encliqueter.

2. Garniture (10) pour une roue de véhicule (12) selon la revendication 1, **caractérisée en ce que** le dispositif de fixation (24) comprend au moins un dispositif de mesure de pression (40) qui est conçu pour détecter la contraction du dispositif de fixation (24) contre la jante (26), de préférence le rebord de la jante (13).

3. Garniture (10) pour une roue de véhicule (12) selon la revendication 1, **caractérisée en ce que** le dispositif de fixation (24) comprend au moins un, voire plusieurs moyens de fixation détachables (38) et/ou au moins un, voire plusieurs moyens de fixation (38) applicables ou montables amovibles, en particulier en coulissement, dans la direction radiale.

4. Garniture (10) pour une roue de véhicule (12) selon la revendication précédente, **caractérisée en ce que** le dispositif de fixation (24) comprend un mécanisme d'accouplement (90) qui accouple un mouvement d'au moins deux moyens de fixation (38) mobiles, de préférence tous mobiles, lors de l'actionnement, de préférence lors de la contraction du dispositif de fixation (28) dans la direction radiale (34) et/ou dans la direction axiale, de préférence, dans laquelle le mécanisme d'accouplement (90) est conçu de telle sorte que le mouvement des moyens de fixation (38) mobiles accouplés (38) est régulier.

5. Garniture (10) pour une roue de véhicule (12) selon la revendication précédente, **caractérisée en ce que** le mécanisme d'accouplement (90) comprend une bague de serrage (92) qui peut être déplacée par une rotation dans la direction périphérique (30), de préférence par un filetage (96), dans la direction axiale (48), dans laquelle le dispositif de fixation (24) peut être actionné par un mouvement de la bague de serrage (92) dans la direction axiale (48), de préférence les moyens de fixation (38) peuvent être pivotés par un mouvement de la bague de serrage (92) dans la direction axiale, radialement vers l'intérieur.

6. Garniture (10) pour une roue de véhicule (12) selon la revendication 4, **caractérisée en ce que** le mécanisme d'accouplement (90) comprend un élément de serrage (106), **en ce qu'**au moins deux moyens de fixation (38) sont reliés ensemble ou sont reliés ensemble par les au moins deux moyens de fixation (38), dans laquelle l'élément de serrage (106) est conçu de manière à pouvoir être raccourci ou rallongé dans son étendue dans la direction radiale (34), dans laquelle le dispositif de fixation (24) peut être actionné par un raccourcissement ou un rallongement de l'élément de serrage (106).

7. Garniture (10) pour une roue de véhicule (12) selon l'une des revendications précédentes, **caractérisée en ce que** le dispositif de fixation (24) et/ou le dispositif de positionnement (22) peut être actionné pneumatiquement ou hydrauliquement, de préférence, dans laquelle le dispositif de fixation (24) et/ou le dispositif de positionnement (22) comprennent une source de moyen de pression (118) ou comprennent des raccords (128) avec lesquels ils peuvent être reliés à une source de moyen de pression (118).

8. Garniture (10) pour une roue de véhicule (12) selon l'une ou selon plusieurs des revendications précédentes, **caractérisée en ce que** le dispositif de fixation (24) est conçu de telle sorte qu'il, en particulier au moyen de sections de contact qui sont disposées de préférence sur les moyens de fixation (38), entre en contact avec la jante (26), en particulier avec le rebord de la jante (13), sur au moins un sixième, de préférence un quart, de préférence un tiers, de préférence la moitié de son étendue périphérique, lorsque l'garniture (10) est fixé à la roue de véhicule (12).

9. Garniture (10) pour une roue de véhicule (12) selon l'une ou selon plusieurs des revendications précédentes, **caractérisée en ce que** le dispositif de fixation (24), de préférence le moyen de fixation (38) est conçu de telle sorte que la garniture (10), lors de la fixation ou de la contraction sur la jante (26) de la roue de véhicule (12) dans la direction axiale (48) soit poussée vers la jante (26).

10. Garniture (10) pour une roue de véhicule (12) selon l'une ou selon plusieurs des revendications précédentes, **caractérisée en ce que** le dispositif de fixation (24), comprend une surface de serrage, observée dans la direction axiale (48) inclinée radialement vers l'intérieur, de préférence linéaire ou arquée, dans laquelle le dispositif de fixation (24) est conçu de sorte que la surface de serrage, lors de la fixation et de la contraction de la garniture (10) sur la jante (26) se déplace radialement vers l'intérieur, en particulier se coulisse, et la surface de serrage est conçue de manière à ce que la garniture (10), lors de la fixation et de la contraction sur la jante (26) de la roue de véhicule (12) est poussée dans la direction axiale (48) vers la jante (26).

11. Garniture (10) pour une roue de véhicule (12) selon l'une ou selon plusieurs des revendications précédentes, **caractérisée en ce que** le corps de base (20) comprend une partie côté jante (70) et une partie opposée à la jante (72) détachable de celle-ci.

12. Garniture (10) pour une roue de véhicule (12) selon l'une ou selon plusieurs des revendications précédentes, **caractérisée en ce que** le corps de base (20), ou bien voire chacune parmi la partie côté jante (70) et la partie opposée à la jante (72), comprend/comprennent au moins deux segments (50) périphériques.

13. Garniture (10) pour une roue de véhicule (12) selon la revendication précédente, **caractérisée en ce que** les segments périphériques (50), de préférence détachables les uns des autres, sont reliés les uns aux autres en particulier par un mécanisme rabattable (54), de préférence détachable, ou une structure de blocage arrière (58), de préférence qui comprend un prolongement (60) conçu en forme de queue d'aronde sur l'un des segments et un évidement correspondant (62) sur un autre segment parmi les segments (50), dans la direction périphérique (30).

14. Garniture (10) pour une roue de véhicule (12) selon l'une des trois revendications précédentes, **caractérisée en ce que** la partie (70) côté jante et la partie (72) opposée à la jante ou bien chaque segment (50) de la partie côté jante (70) et la partie (72) opposée à la jante lorsqu'elles sont assemblées, forment une section de réception dans laquelle un corps de surface de roulement (18) ou bien un segment d'un corps de surface de roulement (18) lorsqu'ils sont assemblés par complémentarité de forme, peut être inséré de manière à être retenu notamment par un blocage arrière par complémentarité de forme.
